(19) Europäisches Patentamt
European Patent Office
Office européen des brevets

(11) EP 1 960 467 B1

(12) **EUROPÄISCHE PATENTSCHRIFT**

(45) Veröffentlichungstag und Bekanntmachung des Hinweises auf die Patenterteilung:
**05.05.2010 Patentblatt 2010/18**

(21) Anmeldenummer: **06818834.1**

(22) Anmeldetag: **27.11.2006**

(51) Int Cl.:
***C08L 69/00*** *(2006.01)*

(86) Internationale Anmeldenummer:
**PCT/EP2006/011335**

(87) Internationale Veröffentlichungsnummer:
**WO 2007/065577 (14.06.2007 Gazette 2007/24)**

(54) **POLYCARBONAT-FORMMASSEN**

POLYCARBONATE MOLDING COMPOUNDS

MATIERES A MOULER POLYCARBONATE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **09.12.2005 DE 102005058836**

(43) Veröffentlichungstag der Anmeldung:
**27.08.2008 Patentblatt 2008/35**

(73) Patentinhaber: **Bayer MaterialScience AG**
**51368 Leverkusen (DE)**

(72) Erfinder:
- **ECKEL, Thomas**
  **41540 Dormagen (DE)**
- **SEIDEL, Andreas**
  **41542 Dormagen (DE)**
- **WITTMANN, Dieter**
  **51375 Leverkusen (DE)**

(56) Entgegenhaltungen:
**WO-A-99/65991**

EP 1 960 467 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

Printed by Jouve, 75001 PARIS (FR)

## Beschreibung

Die Erfindung betrifft schlagzähmodifizierte Polycarbonat-Zusammensetzungen, die sich bei exzellenter Tieftemperaturduktilität durch ein verbessertes Verarbeitungsverhalten gekennzeichnet durch eine höhere Schmelzefluidität im Spritzguss auszeichnen. Die Erfindung betrifft darüber hinaus insbesondere solche Polycarbonat-Zusammensetzungen mit zuvorgenannten Eigenschaften, die eine gute Verarbeitungsstabilität bei hohen Temperaturen, eine gute Alterungsstabilität unter feucht-warmen Bedingungen sowie eine gute Spannungsrissbeständigkeit aufweisen. g Desweiteren betrifft die Erfindung auch flammwidrige Polycarbonat-Zusammensetzungen, die sich bei hoher Duktilität durch ein verbessertes Verarbeitungsverhalten gekennzeichnet durch eine höhere Schmelzefluidität im Spritzguss auszeichnen.

Schlagzähmodifizierte Polycarbonat-Zusammensetzungen, z.B. solche Abmischungen mit ABS (Acrylnitril-Butadien-Styrol), sind bekannt für ihre hohe Duktilität bei Raumtemperatur und tiefen Temperaturen sowie ein gutes Vearbeitungsverhalten. Zur Realisierung anspruchsvoller Anwendungen, insbesondere komplexer Bauteilgeometrien, ist es jedoch oft erwünscht, das Verarbeitungsverhalten weiter zu verbessern. Übliche Maßnahmen des Standes der Technik, die zur gewünschten Verbesserung führen, bewirken jedoch in der Regel eine Verschlechterung der Zähigkeit und/oder der Spannungsrissbeständigkeit unter Einfluss von Medien wie Lösungsmitteln, Ölen, Fetten, etc. Dieses ist insofern kritisch, als dass an Bauteile aus PC/ABS, z.B. Sicherheitsteile im Automobilbau, in der Regel hohe Qualitätsanforderung an die Duktilität, zum Teil bis zu tiefen Temperaturen gestellt werden. In diesen wie auch anderen Anwendungsbereichen von PC/ABS-Blends, wie beispielsweise bei Gehäusen elektronischer Geräte, kommen die Materialien oft auch in Kontakt mit verschiedenen Medien (z.B. Fette, Öle, Lösungsmittel, Hautcremes, etc.) und sollen solchen Medieneinflüsse auch unter mechanischer Belastung möglichst lange unbeschadet widerstehen.

Eine weitere Anforderung an PC/ABS-Zusammensetzungen stellt eine verbesserte Verarbeitungsstabilität sowie Hydrolysestabilität, d.h. Langzeitstabilität im feucht-warmen Klima dar. Dieses ist erforderlich, um sicherzustellen, dass die mechanischen Eigenschaften auf hohem Niveau über ein_ breites Verarbeitungsfenster realisiert werden können und auch nach Wärme- bzw. Wärme-Feucht-Lagerung möglichst geringen Veränderungen unterliegen.

Aus der WO 01/25334 ist bekannt, dass PC/ABS-Zusammensetzungen auf Basis von ABS, welches im Massepolymerisationsverfahren hergestellt wurde, gute Verarbeitungsstabilität sowie eine verbesserte Balance aus Tieftemperaturzähigkeit und Schmelzefließfähigkeit aufweisen können. Die EP 0 900 827 lehrt, dass auch PC/ABS-Zusammensetzungen auf Basis von ABS, welches im Emulsionspolymerisationsverfahren hergestellt wurde, grundsätzlich gute Verarbeitungsstabilität aufweisen können, sofern der im Emulsionsverfahren hergestellte Schlagzähmodifikator im Wesentlichen frei von basischen Komponenten ist und auf Basis spezieller Emulgatoren, wie Alkylsulfonaten hergestellt wurde. Aus der WO 91/18052 A1 sind PC/ABS-Zusammensetzungen mit hoher Thermostabilität bekannt, die dadurch gekennzeichnet sind, dass die Propfpolymerisate einen Natrium- und Kalium-Ionen-Gehalt von weniger als 1500 ppm, bevorzugt weniger als 800 ppm besitzen sowie einen bestimmte Menge an Antioxidantien enthalten. Aus der WO 99/11713 A1 sind flammgeschützte PC/ABS-Zusammensetzungen mit verbesserter Feuchtigkeitsbeständigkeit und gleichzeitig hohem mechanischen Eigenschaftsniveau bekannt, die dadurch gekennzeichnet sind, dass die Pfropfpolymerisate einen Gehalt an Alkalimetallen von weniger als 1 ppm besitzen. Insbesondere der Natrium- und Kalium-Ionen-Gehalt des Pfopfpolymers sollte kleiner 1 ppm sein.

Desweitem sind auch solche PC/ABS-Zusammensetzungen grundsätzlich bekannt, welche eine Mischung verschiedener, nach unterschiedlichen Polymerisationsverfahren hergestellten ABS-Pfropfpolymere enhalten.

In US-A 4,624,986 und US-A 4,526,926 werden Polycarbonat-Pfropfcopolymer-Zusammensetzungen mit geringem Glanz offenbart, wobei als Pfropfcopolymer ein Pfropfcopolymer hergestellt nach dem Masse-Polymerisationsverfahren oder ein Pfropfcopolymer hergestellt nach dem Emulsions-Polymerisationsverfahren sowie Mischungen daraus beschrieben werden. Das Molekulargewicht des SAN im eingesetzten ABS wird hier nicht eingeschränkt.

In der US-A 4,677,162 werden thermoplastische Zusammensetzungen offenbart, die aromatisches Polycarbonat, ein Pfropfcopolymer aus Acrylnitril / Butadien / Styrol- (ABS) und einen Schlagzähmodifikator enthalten. Das ABS-Pfropfpolymer wird nach dem Masse-Polymerisationsverfahren hergestellt, besitzt einen Polybutadiengehalt von 1 bis 18 Gew.-% und eine durchschnittliche Kautschukpartikelgröße von größer als 0,75 $\mu$m. Als Schlagzähmodifikator wird ein bevorzugt nach dem Emulsionsverfahren hergestelltes elastomerbasierendes Pfropfcopolymer offenbart, dessen Elastomergehalt zwischen 15 und 98 Gew.-% liegt, und dessen durchschnittliche Kautschukpartikelgröße kleiner als 0,75 $\mu$m ist. Der Einfluß des Molekulargewichts des im ABS enthaltenen SAN wird nicht diskutiert.

In der EP-A 0 312 929 werden PC/ABS-Zusammensetzungen mit Mischungen aus mindestens zwei Pfropfmischpolymerisaten offenbart, wobei das eine Pfropfmischpolymerisat nach dem Emulsionsverfahren hergestellt wurde und im Überschuss bezogen auf die Gesamtmenge an dem Gesamtelastomerengehalt vorliegt, und das andere Pfropfmischpolymerisat nach einem anderen Verfahren (z.B. Masse- oder Masse-Suspensions-Polymerisation) hergestellt wurde.

Die WO 94/24210 offenbart thermoplastische Zusammensetzungen enthaltend aromatisches Polycarbonat, eine Mischung aus mindestens zwei Pfropfmischpolymerisaten, wobei das eine Pfropfmischpolymerisat nach dem Masse-Polymerisationsverfahren hergestellt wurde und das andere Pfropfmischpolymerisat nach dem Emulsions-Polymerisationsverfahren hergestellt wurde, ein Epoxy-Gruppen enthaltendes Copolymer und gegebenenfalls ein aromatisches Copolymer.

In EP-A 0 456 030 werden PC/ABS-Zusammensetzungen offenbart enthaltend Polycarbonat und eine Propfpolymerisat-Komponente bestehend aus einer Mischung aus Masse-Pfropfpolymerisat und Emulsions-Pfropfpolymerisat, wobei der Anteil an Emulsions-Pfropfpolymerisat in der Pfropfpolymerisat-Komponente 10 - 50 Gew.-% beträgt.

Aus der EP 0 372 336 A2 sind PC/ABS-Zusammensetzungen mit hoher Zähigkeit bei tiefen Temperaturen bekannt, die dadurch gekennzeichnet sind, dass die Pfropfpolymerisate und/oder die Copolymerisate zumindest teilweise durch Pfropfpolymerisate und/oder Copolymerisate ersetzt sind, in denen die Pfropfauflage und/oder das Copolymerisat mindestens 86 Gew.-% Vinylaromaten enthält. Über die SAN-Molekulargewichte in den verschiedenen Pfropfpolymerisaten und Copolymerisaten wird keine Aussage gemacht.

Die WO 99/65991 A1 offenbart schlagzähmodifizierte Polycarbonat-Zusammensetzungen mit verbessertem Galvanisierungsverhalten, welche eine Mischung zweier Pfropfcopolymerisate enthalten, wobei das eine Pfropfpolymerisat freies SAN-Copolymer mit einem mittleren Molekulargewicht von 50000 bis 150000 g/mol enthält. In den Beispielen sind Zusammensetzungen enthaltend eine Pfropfpolymerisat-Mischung offenbart, die sich im mittleren Molekulargewicht des im jeweiligen Pfropfpolymerisat enthaltenen freien SAN-Copolymers um bis zu 30000 g/mol unterscheiden.

Die der Erfindung zugrunde liegende Aufgabe besteht darin, PC/ABS-Formmassen zur Herstellung komplexer Formteile bereitzustellen, welche eine verbesserte Balance aus Zähigkeit auch bei tiefen Temperaturen und Schmelzefließfähigkeit aufweisen und darüber hinaus eine gute Alterungsbeständigkeit unter dem Einfluss eines feucht-warmen Klimas, eine gute Verarbeitungsstabilität sowie eine gute Chemikalienbeständigkeit aufweisen. Eine weitere Aufgabe der Erfindung besteht darin, flammwidrige Formmassen mit hoher Zähigkeit und verbesserter Schmelzefließfähigkeit bereitzustellen.

Überraschenderweise wurde gefunden, dass die zuvorgenannte Aufgabe gelöst wird durch schlagzähmodifizierte Polycarbonat-Zusammensetzungen, welche eine Mischung aus mindestens zwei Pfropfpolymerisat-Typen, jeweils enthaltend freies (d.h. nicht chemisch an den Kautschuk gebundenes) (Co)Polymerisat, sowie optional darüber hinaus zugesetztes (Co)Polymerisat enthalten, wobei das gewichtsgemittelte Molekulargewicht des freien (Co)Polymerisats im ersten Pfropfpolymerisat im Vergleich zum gewichtsgemittelten Molekulargewicht des freien (Co)Polymerisats im zweiten Pfropfpolymer bzw. für den Fall des Zusatzes von weiterem (Co)Polymerisat im Vergleich zum gewichtsgemittelten Molekulargewicht der Mischung aus dem freien (Co)Polymerisat des zweiten Pfropfpolymers und dem zugesetztem (Co)Polymerisat um mindestens 32000 g/mol, bevorzugt mindestens 40000 g/mol, insbesondere mindestens 60000 g/mol niedriger ist.

Gegenstand der vorliegenden Erfindung sind daher Zusammensetzungen enthaltend

A) aromatisches Polycarbonat und/oder Polyestercarbonat,

B) ein erstes Pfropfpolymerisat,

C) ein zweites Pfropfpolymerisat,

D) gegebenenfalls ein (Co)Polymerisat, und

E) gegebenenfalls Flammschutzmittel,

wobei das gewichtsgemittelte Molekulargewicht des freien (Co)Polymerisats im Pfropfpolymerisat B im Vergleich zum gewichtsgemittelten Molekulargewicht der Mischung aus dem freien (Co)Polymerisat im Pfropfpolymerisat C und des (Co)Polymerisats D um mindestens 32000 g/mol, bevorzugt um mindestens 40000 g/mol, insbesondere um mindestens 60000 g/mol niedriger ist.

In einer bevorzugter Ausführungsform beträgt der Anteil des Pfropfpolymerisats B an der Summe aus Pfropfpolymerisaten und (Co)Polymerisaten B + C + D 15 bis 85 Gew.-%, insbesondere 20 bis 80 Gew.-%, besonders bevorzugt 25 bis 75 Gew.-%.

Bevorzugt sind solche erfindungsgemäßen Zusammensetzungen, in denen die Komponente B, in besonders bevorzugter Ausführungsform beide Pfropfpolymerisate B und C im Masse-, Lösungs-oder Masse-Suspensions-Polymerisationsverfahren hergestellt wurden.

Vorzugsweise enthalten die erfindungsgemäßen Zusammensetzungen

A) 25 bis 85 Gew.-Teile, bevorzugt 35 bis 80 Gew.-Teile, besonders bevorzugt 40 bis 75 Gew.-Teile aromatisches Polycarbonat und/oder Polyestercarbonat und

B) 1 bis 60 Gew.-Teile, bevorzugt 2 bis 50, besonders bevorzugt 3 bis 40 Gew.-Teile eines ersten kautschukmodifizierten Pfropfpolymerisats, welches vorzugsweise freies, d.h. nicht chemisch an den Kautschuk gebundenes Copolymer mit einem gewichtsgemittelten Molekulargewicht von 60000 bis 99000, bevorzugt 70000 bis 98000 g/mol, besonders bevorzugt 70 000 bis 90 000 g/mol enthält,

C) 1 bis 60 Gew.-Teile, bevorzugt 2 bis 50 Gew.-Teile, besonders bevorzugt 3 bis 40 Gew.-Teile eines zweiten kautschukmodifizierten Pfropfpolymerisats,

D) 0 bis 40 Gew.-Teile, bevorzugt 0 bis 30 Gew.-Teile, besonders bevorzugt 3 bis 20 Gew.-Teile eines (Co)Polymerisats, und

E) 0 bis 30 Gew.-Teile, bevorzugt 1 bis 25 Gew.-Teile, besonders bevorzugt 2 bis 20 Gew.-Teile eines Flammschutzmittels,

wobei das gewichtsgemittelte Molekulargewicht des freien (Co)Polymerisats im Pfropfpolymerisat B im Vergleich zum gewichtsgemittelten Molekulargewicht der Mischung aus dem freien (Co)Polymerisat im Pfropfpolymerisat C und des (Co)Polymerisats D um mindestens 32000 g/mol, bevorzugt mindestens 40000 g/mol, insbesondere mindestens 60000 g/mol niedirger ist, und

die Summe der Gewichtsteile der Komponenten A+B+C+D+E auf 100 normiert ist.

Als Pfropfpolymerisate B) und C) wird entweder eine Mischung zweier im Masse-, Lösungs- oder Masse-Suspensions-Polymerisationsverfahren hergestellter Pfropfpolymerisate, oder eine Mischung aus einem im Masse-, Lösungs- oder Masse-Suspensions-Polymerisationsverfahren sowie einem im Emulsionsverfahren hergestellten Pfropfpolymerisat, oder aber eine Mischung aus zwei im Emulsionsverfahren hergestellten Pfropfpolymerisaten eingesetzt, wobei vorzugsweise Pfropfpolymerisate B) und C) frei sind von Bestandteilen bzw. verfahrensbedingten Verunreinigungen, die das Polycarbonat, insbesondere unter feucht-warmen Bedingungen, katalytisch abbauen.

In einer besonders bevorzugten Ausführungsform ist mindestens eine der Komponenten B oder C, in bevorzugter Weise die Komponente B ein Pfropfpolymerisat, welches im Masse-, Lösungs- oder Masse-Suspensions-Polymerisationsverfahren hergestellt wurde. Insbesondere bevorzugt sind solche erfindungsgemäßen Zusammensetzungen, in denen beide Pfropfpolymerisate B und C im Masse-, Lösungs- oder Masse-Suspensions-Polymerisationsverfahren hergestellt sind.

## Komponente A

Erfindungsgemäß geeignete aromatische Polycarbonate und/oder aromatische Polyestercarbonate gemäß Komponente A sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964 sowie die DE-AS 1 495 626, DE-A 2 232 877, DE-A 2 703 376, DE-A 2 714 544, DE-A 3 000 610, DE-A 3 832 396; zur Herstellung aromatischer Polyestercarbonate, z. B. DE-A 3 077 934).

Die Herstellung aromatischer Polycarbonate erfolgt z.B. durch Umsetzung von Diphenolen mit Kohlensäurehalogeniden, vorzugsweise Phosgen und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielsweise Monophenolen und gegebenenfalls unter Verwendung von trifunktionellen oder mehr als trifunktionellen Verzweigern, beispielsweise Triphenolen oder Tetraphenolen. Ebenso ist eine Herstellung über ein Schmelzepolymerisationsverfahren durch Umsetzung von Diphenolen mit beispielsweise Diphenylcarbonat möglich.

Diphenole zur Herstellung der aromatischen Polycarbonate und/oder aromatischen Polyestercarbonate sind vorzugsweise solche der Formel (I)

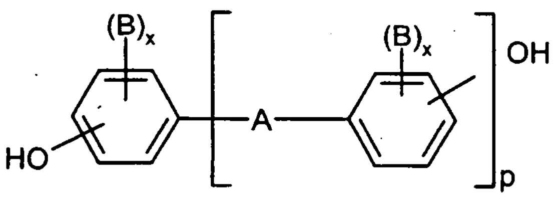

(I),

wobei

A eine Einfachbindung, $C_1$ bis $C_5$-Alkylen, $C_2$ bis $C_5$-Alkyliden, $C_5$ bis $C_6$-Cycloalkyliden, -O-, -SO-, -CO-, -S-, $-SO_2-$, $C_6$ bis $C_{12}$-Arylen, an das weitere aromatische gegebenenfalls Heteroatome enthaltende Ringe kondensiert sein können,
oder ein Rest der Formel (II) oder (III)

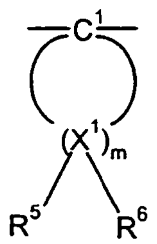

(II)

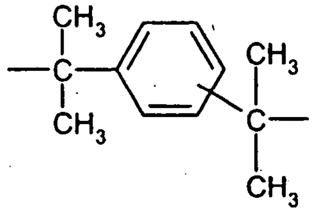

(III)

B jeweils $C_1$ bis $C_{12}$-Alkyl, vorzugsweise Methyl, Halogen, vorzugsweise Chlor und/oder Brom

x jeweils unabhängig voneinander 0, 1 oder 2,

p 1 oder 0 sind, und

$R^5$ und $R^6$ für jedes $X^1$ individuell wählbar, unabhängig voneinander Wasserstoff oder $C_1$ bis $C_6$ Alkyl, vorzugsweise Wasserstoff, Methyl oder Ethyl,

$X^1$ Kohlenstoff und

m eine ganze Zahl von 4 bis 7, bevorzugt 4 oder 5 bedeuten, mit der Maßgabe, dass an mindestens einem Atom $X^1$, $R^5$ und $R^6$ gleichzeitig Alkyl sind.

Bevorzugte Diphenole sind Hydrochinon, Resorcin, Dihydroxydiphenole, Bis-(hydroxyphenyl)-$C_1$-$C_5$-alkane, Bis-(hydroxyphenyl)-$C_5$-$C_6$-cycloalkane, Bis-(hydroxyphenyl)-ether, Bis-(hydroxyphenyl)-sulfoxide, Bis-(hydroxyphenyl)-ketone, Bis-(hydroxyphenyl)-sulfone und $\alpha,\alpha$-Bis-(hydroxyphenyl)-diisopropyl-benzole sowie deren kernbromierte und/oder kernchlorierte Derivate.

Besonders bevorzugte Diphenole sind 4,4'-Dihydroxydiphenyl, Bisphenol-A, 2,4-Bis(4-hydroxyphenyl)-2-methylbutan, 1,1-Bis-(4-hydroxyphenyl)-cyclohexan, 1,1-Bis-(4-hydroxyphenyl)-3.3.5-trimethylcyclohexan, 4,4'-Dihydroxydiphenylsulfid, 4,4'-Dihydroxydiphenylsulfon sowie deren di-und tetrabromierten oder chlorierten Derivate wie beispielsweise 2,2-Bis(3-Chlor-4-hydroxyphenyl)-propan, 2,2-Bis-(3,5-dichlor-4-hydroxyphenyl)-propan oder 2,2-Bis-(3,5-dibrom-4-hydroxyphenyl)-propan. Insbesondere bevorzugt ist 2,2-Bis-(4-hydroxyphenyl)-propan (Bisphenol-A).

Es können die Diphenole einzeln oder als beliebige Mischungen eingesetzt werden. Die Diphenole sind literaturbekannt oder nach literaturbekannten Verfahren erhältlich.

Für die Herstellung der thermoplastischen, aromatischen Polycarbonate geeignete Kettenabbrecher sind beispielsweise Phenol, p-Chlorphenol, p-tert.-Butylphenol oder 2,4,6-Tribromphenol, aber auch langkettige Alkylphenole, wie 4-[2-(2,4,4-Trimethylpentyl)]-phenol, 4-(1,3-Tetramethylbutyl)-phenol gemäß DE-A 2 842 005 oder Monoalkylphenole oder Dialkylphenole mit insgesamt 8 bis 20 Kohlenstoffatomen in den Alkylsubstituenten, wie 3,5-di-tert.-Butylphenol, p-iso-Octylphenol, p-tert.-Octylphenol, p-Dodecylphenol und 2-(3,5-Dimethylheptyl)-phenol und 4-(3,5-Dimethylheptyl)-phenol. Die Menge an einzusetzenden Kettenabbrechern beträgt im allgemeinen zwischen 0,5 Mol%, und 10 Mol%, bezogen auf die Molsumme der jeweils eingesetzten Diphenole.

Die thermoplastischen, aromatischen Polycarbonate haben mittlere Gewichtsmittelmolekulargewichte ($M_w$, gemessen z. B. durch Ultrazentrifuge oder Streulichtmessung) von 10.000 bis 200.000 g/mol, vorzugsweise 15.000 bis

80.000 g/mol, besonders bevorzugt 24.000 bis 32.000 g/mol.

Die thermoplastischen, aromatischen Polycarbonate können in bekannter Weise verzweigt sein, und zwar vorzugsweise durch den Einbau von 0,05 bis 2,0 Mol%, bezogen auf die Summe der eingesetzten Diphenole, an dreifunktionellen oder mehr als dreifunktionellen Verbindungen, beispielsweise solchen mit drei und mehr phenolischen Gruppen.

Geeignet sind sowohl Homopolycarbonate als auch Copolycarbonate. Zur Herstellung erfindungsgemäßer Copolycarbonate gemäß Komponente A können auch 1 bis 25 Gew.%, vorzugsweise 2,5 bis 25 Gew.%, bezogen auf die Gesamtmenge an einzusetzenden Diphenolen, Polydiorganosiloxane mit Hydroxyaryloxy-Endgruppen eingesetzt werden. Diese sind bekannt (US 3 419 634) und nach literaturbekannten Verfahren herstellbar. Die Herstellung Polydiorganosiloxanhaltiger Copolycarbonate ist in der DE-A 3 334 782 beschrieben.

Bevorzugte Polycarbonate sind neben den Bisphenol-A-Homopolycarbonaten die Copolycarbonate von Bisphenol-A mit bis zu 15 Mol%, bezogen auf die Molsummen an Diphenolen, anderen als bevorzugt oder besonders bevorzugt genannten Diphenolen, insbesondere 2,2-Bis(3,5-dibrom-4-hydroxyphenyl)-propan.

Aromatische Dicarbonsäuredihalogenide zur Herstellung von aromatischen Polyestercarbonaten sind vorzugsweise die Disäuredichloride der Isophthalsäure, Terephthalsäure, Diphenylether-4,4'-dicarbonsäure und der Naphthalin-2,6-dicarbonsäure.

Besonders bevorzugt sind Gemische der Disäuredichloride der Isophthalsäure und der Terephthalsäure im Verhältnis zwischen 1:20 und 20:1.

Bei der Herstellung von Polyestercarbonaten wird zusätzlich ein Kohlensäurehalogenid, vorzugsweise Phosgen, als bifunktionelles Säurederivat mit verwendet.

Als Kettenabbrecher für die Herstellung der aromatischen Polyestercarbonate kommen außer den bereits genannten Monophenolen noch deren Chlorkohlensäureester sowie die Säurechloride von aromatischen Monocarbonsäuren, die gegebenenfalls durch $C_1$ bis $C_{22}$-Alkylgruppen oder durch Halogenatome substituiert sein können, sowie aliphatische $C_2$ bis $C_{22}$-Monocarbonsäurechloride in Betracht.

Die Menge an Kettenabbrechern beträgt jeweils 0,1 bis 10 Mol%, bezogen im Falle der phenolischen Kettenabbrecher auf Mol Diphenol und im Falle von Monocarbonsäurechlorid-Kettenabbrecher auf Mol Dicarbonsäuredichlorid.

Die aromatischen Polyestercarbonate können auch aromatische Hydroxycarbonsäuren eingebaut enthalten.

Die aromatischen Polyestercarbonate können sowohl linear als auch in bekannter Weise verzweigt sein (siehe dazu DE-A 2 940 024 und DE-A 3 007 934).

Als Verzweigungsmittel können beispielsweise drei- oder mehrfunktionelle Carbonsäurechloride, wie Trimesinsäuretrichlorid, Cyanursäuretrichlorid, 3,3'-,4,4'-Benzophenon-tetracarbonsäuretetrachlorid, 1,4,5,8-Napthalintetracarbon-säuretetrachlorid oder Pyromellithsäuretetrachlorid, in Mengen von 0,01 bis 1,0 Mol% (bezogen auf eingesetzte Dicarbonsäuredichloride) oder drei- oder mehrfunktionelle Phenole, wie Phloroglucin, 4,6-Dimethyl-2,4,6-tri-(4-hydroxyphenyl)-hept-2-en, 4,6-Dimethyl-2,4-6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis[4,4-bis(4-hydroxy-phenyl)-cyclohexyl]-propan, 2,4-His(4-hydroxyphenyl-isopropyl)-phenol, Tetra-(4-hydroxyphenyl)-methan, 2,6-Bis(2-hydroxy-5-methyl-benzyl)-4-methyl-phenol, 2-(4-Hydroxyphenyl)-2-(2,4-dihydroxyphenyl)-propan, Tetra-(4-[4-hydroxyphenyl-isopropyl]-phenoxy)-methan, 1,4-Bis[4,4'-dihydroxytri-phenyl)-methyl]-benzol, in Mengen von 0,01 bis 1,0 Mol% bezogen auf eingesetzte Diphenole verwendet werden. Phenolische Verzweigungsmittel können mit den Diphenolen vorgelegt, Säurechlorid-Verzweigungsmittel können zusammen mit den Säuredichloriden eingetragen werden.

In den thermoplastischen, aromatischen Polyestercarbonaten kann der Anteil an Carbonatstruktureinheiten beliebig variieren. Vorzugsweise beträgt der Anteil an Carbonatgruppen bis zu 100 Mol%, insbesondere bis zu 80 Mol%, besonders bevorzugt bis zu 50 Mol%, bezogen auf die Summe an Estergruppen und Carbonatgruppen. Sowohl der Ester- als auch der Carbonatanteil der aromatischen Polyestercarbonate kann in Form von Blöcken oder statistisch verteilt im Polykondensat vorliegen.

Die relative Lösungsviskosität ($\eta_{rel}$) der aromatischen Polycarbonate und Polyestercarbonate liegt im Bereich 1,18 bis 1,4, vorzugsweise 1,20 bis 1,32 (gemessen an Lösungen von 0,5 g Polycarbonat oder Polyestercarbonat in 100 ml Methylenchlorid-Lösung bei 25°C).

Die thermoplastischen, aromatischen Polycarbonate und Polyestercarbonate können allein oder im beliebigen Gemisch eingesetzt werden.

**Komponente B**

Bei der Komponente B handelt es sich um Pfropfpolymerisate von

B.1) 5 bis 95 Gew.-%, vorzugsweise 30 bis 90 Gew.-% bezogen auf die Komponente B einer Mischung aus

B.1.1) 65 bis 85 Gew.-%, bevorzugt 70 bis 80 Gew.-% bezogen auf B.1 mindestens eines . Monomeren ausgewählt aus der Gruppe der Vinylaromaten (wie beispielsweise Styrol, α-Methylstyrol), kernsubstituierten Vinylaromaten (wie beispielsweise p-Methylstyrol, p-Chlorstyrol) und Methacrylsäure-($C_1$-$C_8$)-Alkylester (wie beispielsweise Methylmethacrylat, Ethylmethacrylat) und

B.1.2) 15 bis 35 Gew.-%, bevorzugt 20 bis 30 Gew.-% bezogen auf B.1 mindestens eines Monomeren ausgewählt aus der Gruppe der Vinylcyanide (wie beispielsweise ungesättigte Nitrile wie Acrylnitril und Methacrylnitril), (Meth)Acrylsäure-($C_1$-$C_8$)-Alkylester (wie beispielsweise Methylmethacrylat, n-Butylacrylat, tert.-Butylacrylat) und Derivate (wie beispielsweise Anhydride und Imide) ungesättigter Carbonsäuren (beispielsweise Maleinsäureanhydrid und N-Phenyl-Maleinimid)
auf

B.2) 95 bis 5 Gew.-%, vorzugsweise 70 bis 10 Gew.-% wenigstens einer Pfropfgrundlage mit einer Glasübergangstemperatur < 0°C, bevorzugt < -20°C, wobei die Pfropfgrundlage B.2) im allgemeinen eine mittlere Teilchengröße ($d_{50}$-Wert) von 0,05 bis 10 μm, vorzugsweise 0,1 bis 5 μm, besonders bevorzugt 0,15 bis 1,5 μm hat.

Die mittlere Teilchengröße $d_{50}$ ist der Durchmesser, oberhalb und unterhalb dessen jeweils 50 Gew.% der Teilchen liegen. Er kann mittels Ultrazentrifugenmessung (W. Scholtan, H. Lange, Kolloid, Z. und Z. Polymere 250 (1972), 782-1796) bestimmt werden.

Bevorzugte Monomere B.1.1 sind ausgewählt aus mindestens einem der Monomere Styrol, α-Methylstyrol und Methylmethacrylat, bevorzugte Monomere B.1.2 sind ausgewählt aus mindestens einem der Monomere Acrylnitril, Maleinsäureanhydrid und Methylmethacrylat.

Besonders bevorzugte Monomere sind B.1.1 Styrol und B.1.2 Acrylnitril.

Für die Pfropfpolymerisate B geeignete Pfropfgrundlagen B.2 sind beispielsweise Dienkautschuke, Dien-Vinyl-Blockcopolymer-Kautschuke, EP(D)M-Kautschuke, also solche auf Basis Ethylen/Propylen und gegebenenfalls Dien, Acrylat-, Polyurethan-, Silikon-, Chloropren- und Ethylen/Vinylacetat-Kautschuke sowie Mischungen aus solchen Kautschuken bzw. Silikon-Acrylat-Kompositkautschuke, in denen die Silikon- und die Acrylatkomponenten chemisch miteinander (z.B. durch Pfropfung) verknüpft sind.

Bevorzugte Pfropfgrundlagen B.2 sind Dienkautschuke (z.B. auf Basis von Butadien oder Isopren), Dien-Vinyl-Blockcopolymer-Kautschuke (z.B. auf Basis von Butadien- und Styrolblöcken), Copolymerisate von Dienkautschuken mit weiteren copolymerisierbaren Monomeren (z.B. gemäß B.1.1 und B.1.2) und Mischungen aus den zuvor genannten Kautschuktypen. Besonders bevorzugt sind reiner Polybutadienkautschuk und Styrol-Butadien-Blockcopolymerkautschuk.

Der Gelanteil der Pfropfpolymerisate beträgt mindestens 15 Gew.%, bevorzugt mindestens 20 Gew.-% (gemessen in Aceton). Der Gelgehalt der Pfropfpolymerisate wird bei 25°C in einem geeigneten Lösungsmittel bestimmt (M. Hoffmann, H. Krömer, R. Kuhn, Polymeranalytik I und II, Georg Thieme-Verlag, Stuttgart 1977).

Besonders bevorzugte Polymerisate B sind z.B. ABS-Polymerisate hergestellt durch radikalische Polymerisation (Emulsions-, Masse- und Suspensions-ABS), wie sie z. B. in der DE-A 2 035 390 (=US-PS 3 644 574) oder in der DE-A 2 248 242 (=GB-PS 1409 275) bzw. in Ullmanns, Enzyklopädie der Technischen Chemie, Bd. 19 (1980), S. 280. ff. beschrieben sind.

Das Pfropfpolymerisat B umfaßt freies, d.h. nicht chemisch an die Kautschukgrundlage gebundenes Copolymerisat aus B.1.1 und B.1.2, welches sich dadurch auszeichnet, dass es in geeigneten Lösungsmittel (z.B. Aceton) gelöst werden kann.

Bevorzugt enthält die Komponente B ein freies Copolymerisat aus B.1.1 und B.1.2, welches ein gewichtsgemitteltes Molekulargewicht (Mw), bestimmt per Gelpermeationschromatographie, von 60000 bis 99000 g/mol, bevorzugt von 70000 bis 98000 g/mol, besonders bevorzugt 70000 bis 90000 g/mol aufweist.

Die Komponente B ist bevorzugt frei von Bestandteilen bzw. verfahrensbedingten Verunreinigungen, die den Abbau des Polycarbonats, insbesondere unter feucht-warmen Bedingungen, katalysieren. Insbesondere ist die Komponente B daher frei von basischen Verbindungen wie beispielsweise Alkali- und Erdalkalisalze von Carbonsäuren und Carbonsäurederivaten, insbesondere Salze von Fettsäuren, sowie frei von Aminen, Amiden und Metallcarbonaten. Solche Verbindungen werden beispielsweise als Polymerisationshilfsstoffe in der Emulsionspolymerisation, bzw. zur Additivierung von Pfropfpolymerisaten eingesetzt.

Besonders bevorzugt wird das Pfropfpolymerisat B im Masse-, Lösungs- oder Masse-Suspensions-Polymerisationsverfahren hergestellt.

In einer bevorzugten Ausführungsform handelt es sich bei dem Pfropfpolymerisat B um ein im Masse-, Lösungs- oder Masse-Suspensions-Polymerisationsverfahren hergestelltes ABS auf Basis eines Butadien-Styrol-Blockcopolymerkautschuks mit einem Kautschukgehalt von 10 bis 25 Gew.-% und einer Pfropfhülle, die jeweils bezogen auf die Monomere der Pfropfhülle aus 22 bis 27 Gew.-% Acrylnitril und aus 73 bis 78 Gew.-% Styrol besteht, und das Pfropfpolymer einen Gelgehalt (gemessen in Aceton) von 20 bis 30 Gew.-% besitzt.

**Komponente C**

Bei der Komponente C handelt es sich um Pfropfpolymerisate von

C.1) 5 bis 95 Gew.-%, vorzugsweise 30 bis 90 Gew.% bezogen auf die Komponente C einer Mischung aus

C.1.1) 65 bis 85 Gew.-%, bevorzugt 70 bis 80 Gew.-% bezogen auf C.1 mindestens eines Monomeren ausgewählt aus der Gruppe der Vinylaromaten (wie beispielsweise Styrol, α-Methylstyrol), kemsubstituierten Vinylaromaten (wie beispielsweise p-Methylstyrol, p-Chlorstyrol) und Methacrylsäure-($C_1$-$C_8$)-Alkylester (wie beispielsweise Methylmethacrylat, Ethylmethacrylat) und

C.1.2) 15 bis 35 Gew.%, bevorzugt 20 bis 30 Gew.% bezogen auf C.1 mindestens eines Monomeren ausgewählt aus der Gruppe der Vinylcyanide (wie beispielsweise ungesättigte Nitrile wie Acrylnitril und Methacrylnitril), (Meth)Acrylsäure-($C_1$-$C_8$)-Alkylester (wie beispielsweise Methylmethacrylat, n-Butylacrylat, tert.-Butylacrylat) und Derivate (wie beispielsweise Anhydride und Imide) ungesättigter Carbonsäuren (beispielsweise Maleinsäureanhydrid und N-Phenyl-Maleinimid)

auf

C.2) 95 bis 5 Gew.-%, vorzugsweise 70 bis 10 Gew.-% wenigstens einer Pfropfgrundlage mit einer Glasübergangstemperatur < 0°C, bevorzugt < -20°C, wobei die Pfropfgrundlage C.2) im allgemeinen eine mittlere Teilchengröße ($d_{50}$-Wert) von 0,05 bis 10 μm, vorzugsweise 0,1 bis 5 μm, besonders bevorzugt 0,15 bis 1,5 μm hat.

Die mittlere Teilchengröße $d_{50}$ ist der Durchmesser, oberhalb und unterhalb dessen jeweils 50 Gew.% der Teilchen liegen. Er kann mittels Ultrazentrifugenmessung (W. Scholtan, H. Lange, Kolloid, Z. und Z. Polymere 250 (1972), 782-1796) bestimmt werden.

Bevorzugte Monomere C.1.1 sind ausgewählt aus mindestens einem der Monomere Styrol, α-Methylstyrol und Methylmethacrylat, bevorzugte Monomere C.1.2 sind ausgewählt aus mindestens einem der Monomere Acrylnitril, Maleinsäureanhydrid und Methylmethacrylat.

Besonders bevorzugte Monomere sind C.1.1 Styrol und C.1.2 Acrylnitril.

Für die Pfropfpolymerisate C geeignete Pfropfgrundlagen C.2 sind beispielsweise Dienkautschuke, Dien-Vinyl-Blockcopolymer-Kautschuke, EP(D)M-Kautschuke, also solche auf Basis Ethylen/- Propylen und gegebenenfalls Dien, Acrylat-, Polyurethan-, Silikon-, Chloropren- und Ethylen/Vinylacetat-Kautschuke sowie Mischungen aus solchen Kautschuken bzw. Silikon-Acrylat-Kompositkautschuke, in denen die Silikon- und die Acrylatkomponenten chemisch (z.B. durch Pfropfung) miteinander verknüpft sind.

Bevorzugte Pfropfgrundlagen C.2 sind Dienkautschuke (z.B. auf Basis von Butadien oder Isopren), Dien-Vinyl-Blockcopolymer-Kautschuke (z.B. auf Basis von Butadien- und Styrolblöcken), Copolymerisate von Dienkautschuken mit weiteren copolymerisierbaren Monomeren (z.B. gemäß C.1.1 und C.1.2) und Mischungen aus den zuvor genannten Kautschuktypen. Besonders bevorzugt sind reiner Polybutadienkautschuk und Styrol-Butadien-Blockcopolymerkautschuk.

Der Gelanteil der Pfropfpolymerisate C beträgt mindestens 15 Gew.%, bevorzugt mindestens 20 Gew.-% (gemessen in Aceton). Der Gelgehalt der Pfropfpolymerisate wird bei 25°C in einem geeigneten Lösungsmittel bestimmt (M. Hoffmann, H. Krömer, R. Kuhn, Polymeranalytik I und II, Georg Thieme-Verlag, Stuttgart 1977).

Besonders bevorzugte Polymerisate C sind z.B. ABS-Polymerisate hergestellt durch radikalische Polymerisation (Emulsions-, Masse- und Suspensions-ABS), wie sie z. B. in der DE-A 2 035 390 (=US-PS 3 644 574) oder in der DE-A 2 248 242 (=GB-PS 1 409 275) bzw. in Ullmanns, Enzyklopädie der Technischen Chemie, Bd. 19 (1980), S. 280 ff. beschrieben sind.

Das Pfropfpolymerisat C umfaßt freies, d.h. nicht chemisch an die Kautschukgrundlage gebundenes Copolymerisat aus C.1.1 und C.1.2, welches sich dadurch auszeichnet, dass es in geeigneten Lösungsmittel (z.B. Aceton) gelöst werden kann.

Das freie Copolymerisat aus C.1.1 und C.1.2 in der Komponente C weist ein höheres gewichtsgemitteltes Molekulargewicht als das freie Copolymerisat aus B.1.1 und B.1.2 in der Komponente B auf, wobei sich die Molekulargewichte bestimmt per Gelpermeationschromatographie der freien Copolymerisate in den beiden Komponenten B und C um mindestens 32 000 g/mol, bevorzugt mindestens 40000 g/mol, insbesondere mindestens 60000 g/mol voneinander unterscheiden.

Die Komponente C ist bevorzugt frei von Bestandteilen bzw. verfahrensbedingten Verunreinigungen, die den Abbau des Polycarbonats, insbesondere unter feucht-warmen Bedingungen, katalyseren. Insbesondere ist die Komponente C daher frei von basischen Verbindungen wie beispielsweise Alkali- und Erdalkalisalze von Carbonsäuren und

Carbonsäurederivaten, insbesondere Salze von Fettsäuren, sowie frei von Aminen, Amiden und Metallcarbonaten. Solche Verbindungen werden beispielsweise als Polymerisationshilfsstoffe in der Emulsionspolymerisation, bzw. zur Additivierung von Pfropfpolymerisaten eingesetzt.

Handelt es sich bei der Komponente C um ein im Emulsions-Vrrfahren hergestelltes Pfropfpolymer, so wird bei der Herstellung des Pfropfpolymers im Pfropfungsschritt bevorzugt entweder kein Emulgator zugesetzt oder aber es kommt als Emulgator eine Säure bzw. das Salz einer starker Säure zum Einsatz. Als geeignete Emulgatoren zu nennen sind insbesondere Alkyl-, Aryl- bzw. Alkylarylsulfonsäuren bzw. Salze dieser Verbindungen, Alkyl-, Aryl- bzw. Alkylarylsulfate, Alkyl-, Aryl- bzw. Alkylarylphosphorsäuren bzw. Salze dieser Verbindungen oder Mischungen aus den zuvorgenannten Verbindungen.

Besonders bevorzugt wird das Pfropfpolymerisat C im Masse-, Lösungs- oder Masse-Suspensions-Polymerisationsverfahren hergestellt.

**Komponente D**

Die Zusammensetzung kann als weitere Komponente D (Co)Polymerisate von mindestens einem Monomeren aus der Gruppe der Vinylaromaten, Vinylcyanide (ungesättigte Nitrile), (Meth)-Acrylsäure-($C_1$ bis $C_8$)-Alkylester, ungesättigte Carbonsäuren sowie Derivate (wie Anhydride und Imide) ungesättigter Carbonsäuren enthalten.

Insbesondere geeignet sind (Co)Polymerisate D) aus

D. 1 50 bis 99 Gew.-%, bevorzugt 65 bis 85 Gew.-%, besonders bevorzugt 70 bis 80 Gew.-% bezogen auf das (Co) Polymerisat D) mindestens eines Monomeren ausgewählt aus der Gruppe der Vinylaromaten (wie beispielsweise Styrol, $\alpha$-Methylstyrol), kemsubstituierten Vinylaromaten (wie beispielsweise p-Methylstyrol, p-Chlorstyrol) und (Meth)Acrylsäure-($C_1$-$C_8$)-Alkylester (wie beispielsweise Methylmethacrylat, n-Butylacrylat, tert.-Butylacrylat) und

D.2 1 bis 50 Gew.-%, bevorzugt 15 bis 35 Gew.-%, besonders bevorzugt 20 bis 30 Gew.-% bezogen auf das (Co) Polymerisat D) mindestens eines Monomeren ausgewählt aus der Gruppe der Vinylcyanide (wie beispielsweise ungesättigte Nitrile wie Acrylnitril und Methacrylnitril), (Meth)Acrylsäure-($C_1$-$C_8$)-Alkylester (wie beispielsweise Methylmethacrylat, n-Butylacrylat, tert.-Butylacrylat), ungesättigte Carbonsäuren und Derivate ungesättigter Carbonsäuren (beispielsweise Maleinsäureanhydrid und N-Phenyl-Maleinimid).

Diese (Co)Polymerisate D) sind harzartig, thermoplastisch und kautschukfrei. Besonders bevorzugt ist das Copolymerisat aus D. 1 Styrol und D.2 Acrylnitril.

Derartige (Co)Polymerisate D) sind bekannt und lassen sich durch radikalische Polymerisation, insbesondere durch Emulsions-, Suspensions-, Lösungs- oder Massepolymerisation herstellen. Die (Co)Polymerisate D) besitzen vorzugsweise mittlere Molekulargewichte $M_w$ (Gewichtsmittel, ermittelt durch Gelpermeationschromatographie) zwischen 50000 und 200000 g/mol, bevorzugt zwischen 80 000 und 200 000 g/mol, besonders bevorzugt zwischen 100 000 und 200 000 g/mol.

**Komponente E**

Als Komponente E können den erfindungsgemäßen Zusammensetzungen Flammschutzmittel, beispielsweise halogenierte organische Verbindungen bzw. phosphorhaltige Flammschutzmittel zugesetzt werden. Letztgenannte kommen bevorzugt zum Einsatz.

Phosphorhaltige Flammschutzmittel (E) im erfindungsgemäßen Sinne sind bevorzugt ausgewählt aus den Gruppen der Mono- und oligomeren Phosphor- und Phosphonsäureester, Phosphonatamine und Phosphazene, wobei auch Mischungen von mehreren Komponenten ausgewählt aus einer oder verschiedenen dieser Gruppen als Flammschutzmittel zum Einsatz kommen können. Auch andere hier nicht speziell erwähnte halogenfreie Phosphorverbindungen können alleine oder in beliebiger Kombination mit anderen halogenfreien Phosphorverbindungen eingesetzt werden.

Bevorzugte Mono- und oligomere Phosphor- bzw. Phosphonsäureester sind Phosphorverbindungen der allgemeinen Formel (IV)

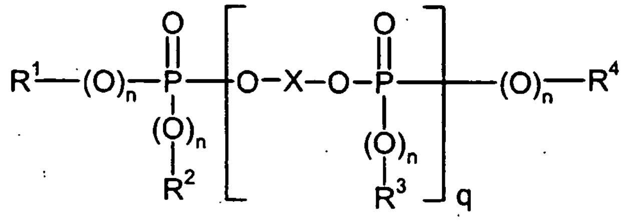

(IV)

worin
$R^1$, $R^2$, $R^3$ und $R^4$, unabhängig voneinander jeweils gegebenenfalls halogeniertes $C_1$ bis $C_8$-Alkyl, jeweils gegebenenfalls durch Alkyl, vorzugsweise $C_1$ bis $C_4$-Alkyl, und/oder Halogen, vorzugsweise Chlor, Brom, substituiertes $C_5$ bis $C_6$-Cycloalkyl, $C_6$ bis $C_{20}$-Aryl oder $C_7$ bis $C_{12}$-Aralkyl,

n unabhängig voneinander, 0 oder 1

q 0 bis 30 und

X einen ein- oder mehrkernigen aromatischen Rest mit 6 bis 30 C-Atomen, oder einen linearen oder verzweigten aliphatischen Rest mit 2 bis 30 C-Atomen, der OH-substituiert sein und bis zu 8 Etherbindungen enthalten kann, bedeuten.

Bevorzugt stehen $R^1$, $R^2$, $R^3$ und $R^4$ unabhängig voneinander für $C_1$ bis $C_4$-Alkyl, Phenyl, Naphthyl oder Phenyl-$C_1$-$C_4$-alkyl. Die aromatischen Gruppen $R^1$, $R^2$, $R^3$ und $R^4$ können ihrerseits mit Halogen- und/oder Alkylgruppen, vorzugsweise Chlor, Brom und/oder $C_1$ bis $C_4$-Alkyl substituiert sein. Besonders bevorzugte Aryl-Reste sind Kresyl, Phenyl, Xylenyl, Propylphenyl oder Butylphenyl sowie die entsprechenden bromierten und chlorierten Derivate davon.

X in der Formel (IV) bedeutet bevorzugt einen ein- oder mehrkernigen aromatischen Rest mit 6 bis 30 C-Atomen. Dieser leitet sich bevorzugt von Diphenolen der Formel (I) ab.

n in der Formel (IV) kann, unabhängig voneinander, 0 oder 1 sein, vorzugsweise ist n gleich 1.

q steht für Werte von 0 bis 30. Bei Einsatz von Mischungen verschiedener Komponenten der Formel (IV) können Mischungen mit vorzugsweise zahlengemittelten q-Werten von 0,3 bis 10, besonders bevorzugt 0,5 bis 10, insbesondere 1,05 bis 1,4 verwendet werden.

X steht besonders bevorzugt für

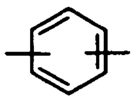 , 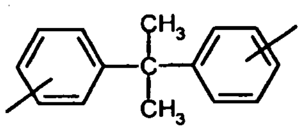 , 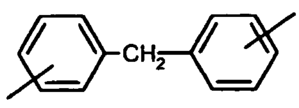 ,

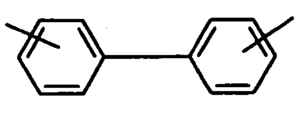

oder deren chlorierte oder bromierte Derivate, insbesondere leitet sich X von Resorcin, Hydrochinon, Bisphenol A oder Diphenylphenol ab. Besonders bevorzugt leitet sich X von Bisphenol A ab.

Der Einsatz von oligomeren Phosphorsäureestem der Formel (IV), die sich vom Bisphenol A ableiten, ist besonders vorteilhaft, da die mit dieser Phosphorverbindung ausgerüsteten Zusammensetzungen eine besonders hohe Spannungsriss- und Hydrolysebeständigkeit sowie eine besonders geringe Neigung zur Belagsbildung bei der Spritzgussverarbeitung aufweisen. Des weiteren lässt sich mit diesen Flammschutzmitteln eine besonders hohe Wärmeformbeständigkeit erzielen.

Als erfmdungsgemäße Komponente E können Monophosphate (q=O), Oligophosphate (q=1-30) oder Mischungen aus Mono- und Oligophosphaten eingesetzt werden.

Monophosphorverbindungen der Formel (IV) sind insbesondere Tributylphosphat, Tris-(2-chlorethyl)-phosphat, Tris-(2,3-dibromprobyl)-phosphat, Triphenylphosphat, Trikresylphosphat, Diphenylkresylphosphat, Diphenyloctylphosphat, Diphenyl-2-ethylkresylphosphat, Tri-(isopropylphenyl)-phosphat, halogensubstituierte Arylphosphate, Methylphosphonsäuredimethylester, Methylphosphonsäurediphenylester, Phenylphosphonsäurediethylester, Triphenylphosphinoxid oder Trikresylphosphinoxid.

Die Phosphorverbindungen gemäß Komponente E Formel (IV) sind bekannt (vgl. z.B. EP-A 363 608, EP-A 640 655) oder lassen sich nach bekannten Methoden in analoger Weise herstellen (z.B. Ullmanns Enzyklopädie der technischen Chemie, Bd. 18, S. 301 ff. 1979; Houben-Weyl, Methoden der organischen Chemie, Bd. 12/1, S. 43; Beilstein Bd. 6, S. 177).

Die mittleren q-Werte können bestimmt werden, indem mittels geeigneter Methode (Gaschromatographie (GC), High Pressure Liquid Chromatography (HPLC), Gelpermeationschromatographie (GPC)) die Zusammensetzung der Phosphat-Mischung (Molekulargewichtsverteilung) bestimmt wird und daraus die Mittelwerte für q berechnet werden.

Phosphonatamine sind vorzugsweise Verbindungen der Formel (V)

$$A_{3-y}\text{-}NB^1_y \qquad (V)$$

in welcher
A für einen Rest der Formel (Va)

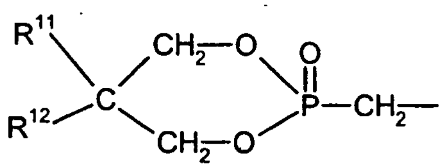

(Va)

oder (Vb)

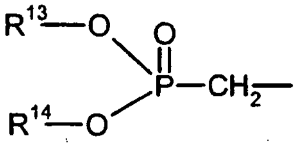

(Vb)

steht,
$R^{11}$ und $R^{12}$ unabhängig voneinander für unsubstituiertes oder substituiertes $C_1$-$C_{10}$-Alkyl oder für unsubstituiertes oder substituiertes $C_6$ bis $C_{10}$-Aryl, stehen,
$R^{13}$ und $R^{14}$ unabhängig voneinander für unsubstituiertes oder substituiertes $C_1$ bis $C_{10}$-Alkyl oder unsubstituiertes oder substituiertes $C_6$ bis $C_{10}$-Aryl stehen oder
$R^{13}$ und $R^{14}$ zusammen für unsubstituiertes oder substituiertes $C_3$ bis $C_{10}$-Alkylen stehen,

- y die Zahlenwerte 0, 1 oder 2 bedeuten und
- $B^1$ unabhängig für Wasserstoff, gegebenenfalls halogeniertes $C_2$ bis $C_8$-Alkyl, unsubstituiertes oder substituiertes $C_6$ bis $C_{10}$-Aryl steht.
- $B^1$ steht vorzugsweise unabhängig für Wasserstoff, für Ethyl, n- oder iso-Propyl, welche durch Halogen substituiert sein können, unsubstituiertes oder durch $C_1$ bis $C_4$-Alkyl und/oder Halogen substituiertes $C_6$ bis $C_{10}$-Aryl, insbesondere Phenyl oder Naphthyl.

Alkyl in $R^{11}$, $R^{12}$, $R^{13}$ und $R^{14}$ steht unabhängig vorzugsweise für Methyl, Ethyl, n-Propyl, iso-Propyl, n-, iso-, sek. oder tert.-Butyl, Pentyl oder Hexyl.

Substituiertes Alkyl in $R^{11}$, $R^{12}$, $R^{13}$ und $R^{14}$ steht unabhängig vorzugsweise für durch Halogen substituiertes $C_1$ bis $C_{10}$-Alkyl, insbesondere für ein- oder zweifach substituiertes Methyl, Ethyl, n-Propyl, iso-Propyl, n-, iso-, sek. oder tert.-Butyl, Pentyl oder Hexyl.

$C_6$ bis $C_{10}$-Aryl steht in $R^{11}$, $R^{12}$, $R^{13}$ und $R^{14}$ unabhängig vorzugsweise für Phenyl, Naphthyl oder Binaphthyl,

insbesondere o-Phenyl, o-Naphthyl, o-Binaphthyl, welche durch Halogen (im allgemeinen ein-, zwei- oder dreifach) substituiert sein können.

$R^{13}$ und $R^{14}$ können zusammen mit den Sauerstoffatomen, an die sie direkt gebunden sind, und dem Phosphoratom eine Ringstruktur bilden.

Beispielhaft und vorzugsweise werden genannt: 5,5,5',5',5",5"-Hexamethyltris(1,3,2-dioxaphosphorinan-methan)amino-2,2',2,,-trioxid der Formel (Va-1)

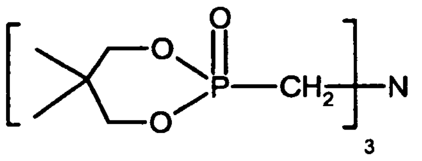

(Va-1)

1,3,2-Dioxaphosphorinan-2-methanamin, N-butyl-N[(5,5-dimethyl-1,3,2-dioxaphosphorinan-2-yl)methyl]-5,5-dimethyl-, P,2-dioxid; 1,3,2-Dioxaphosphorinane-2-methanamin, N-[[5"5-dimethyl-1,3,2-dioxaphosphorinan-2-yl)methyl]-5,5-dimethyl-N-phenyl-, P,2-dioxid; 1,3,2-Dioxaphosphorinan-2-methanamin, N,N-dibutyl-5,5-dimethyl-, 2-oxid, 1,3,2-Dioxaphosphorinan-2-methanimin, N-[(5,5-dimethyl-1,3,2-dioxaphosphorinan-2-yl)methyl]-N-ethyl-5,5-dimethyl-, P,2-dioxid, 1,3,2-Dioxaphosphorinan-2-methanamin, N-butyl-N-[(5,5-dichloromethyl-1,3,2-dioxaphosphorinan-2-yl)-methyl]-5,5-dichloromethyl-, P,2-dioxid, 1,3,2-Dioxaphosphorinan-2-methanamin, N-[(5,5-di-chloromethyl-1,3,2-dioxoaphosphorinan-2-yl)methyl]-5,5-di-chloromethyl-N-phenyl-, P,2-dioxid; 1,3,2-Dioxaphosphorinan-2-methanamin, N,N-di-(4-chlorobutyl)-5,5-dimethyl-2-oxid; 1,3,2-Dioxaphosphorinan-2-methanimin, N-[(5,5-dimethyl-1,3,2-dioxaphosphorinan-2-yl)methan]-N-(2-chloroethyl)-5,5-di(chloromethyl)-, P2-dioxid.

Bevorzugt sind weiterhin:

Verbindungen der Formel (Va-2) oder (Va-3)

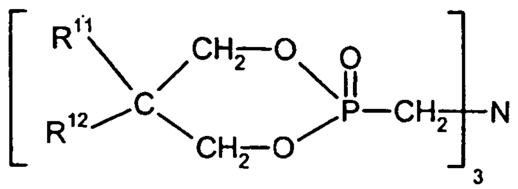

(Va-2)

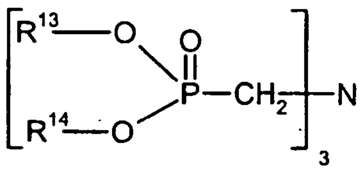

(Va-3)

wobei
$R^{11}$, $R^{12}$, $R^{13}$ und $R^{14}$ die oben angegebenen Bedeutungen haben.
Besonders bevorzugt sind Verbindungen der Formel (Va-2) und (Va-1). Die Herstellung der Phosphonatamine ist beispielsweise in US-PS 5 844 028 beschrieben.

Phosphazene sind Verbindungen der Formeln (VIa) und (VIb)

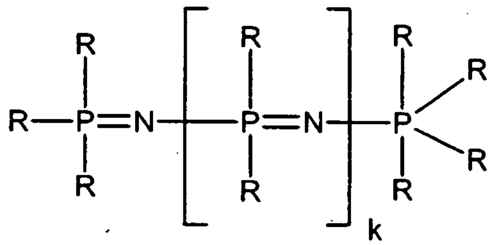

(VIa),

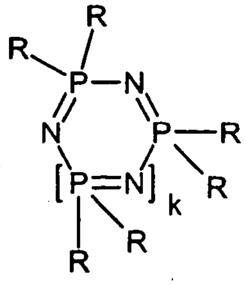

(VIb),

worin

R jeweils gleich oder verschieden ist und für Amino, jeweils gegebenenfalls halogeniertes, vorzugsweise mit Fluor halogeniertes $C_1$ bis $C_8$-Alkyl, oder $C_1$ bis $C_8$-Alkoxy, jeweils gegebenenfalls durch Alkyl, vorzugsweise $C_1$ bis $C_4$-Alkyl, und/oder Halogen, vorzugsweise Chlor und/oder Brom, substituiertes $C_5$ bis $C_6$-Cycloalkyl, $C_6$ bis $C_{20}$-Aryl, vorzugsweise Phenyl oder Naphthyl, $C_6$ bis $C_{20}$-Aryloxy, vorzugsweise Phenoxy, Naphthyloxy, oder $C_7$ bis $C_{12}$-Aralkyl, vorzugsweise Phenyl-$C_1$-$C_4$-alkyl, steht,

k für 0 oder eine Zahl von 1 bis 15, vorzugsweise für eine Zahl von 1 bis 10 steht.

Beispielhaft seien Propoxyphosphazen, Phenoxyphosphazen, Methylphenoxyphosphazen, Aminophosphazen und Fluoralkylphosphazene genannt. Bevorzugt ist Phenoxyphosphazen.

Die Phosphazene können allein oder als Mischung eingesetzt werden. Der Rest R kann immer gleich sein oder 2 oder mehr Reste in den Formeln (Ia) und (Ib) können verschieden sein. Phosphazene und deren Herstellung sind beispielsweise in EP-A 728 811, DE-A 1 961668 und WO 97/40092 beschrieben.

Die Flammschutzmittel können allein oder in beliebiger Mischung untereinander oder in Mischung mit anderen Flammschutzmitteln eingesetzt werden.

**Komponente F**

Darüber hinaus kann die Zusammensetzung weitere übliche Polymeradditive (Komponente F) wie Flammschutzsynergisten, Antidrippingmittel (beispielsweise Verbindungen der Substanzklassen der fluorierten Polyolefine, der Silikone sowie Aramidfasern), Gleit- und Entformungsmittel (beispielsweise Pentaerythrittetrastearat), Nukleiermittel, Antistatika, Stabilisatoren, Füll- und Verstärkungsstoffe (beispielsweise Glas- oder Karbonfasem, Glimmer, Kaolin, Talk, $CaCO_3$ und Glasschuppen) sowie Farbstoffe und Pigmente enthalten.

**Herstellung der Formmassen und Formkörper**

Die erfindungsgemäßen thermoplastischen Formmassen werden hergestellt, indem man die jeweiligen Bestandteile in bekannter Weise vermischt und bei Temperaturen von 200°C bis 300°C in üblichen Aggregaten wie Innenknetern, Extrudern und Doppelwellenschnecken schmelzcompoundiert und schmelzextrudiert.

Die Vermischung der einzelnen Bestandteile kann in bekannter Weise sowohl sukzessive als auch simultan erfolgen, und zwar sowohl bei etwa 20°C (Raumtemperatur) als auch bei höherer Temperatur.

In einer bevorzugten Ausführungsform wird die Komponente D oder eine Teilmenge der Komponente D mit der Komponente B und/oder C oder einer Teilmenge der Komponente B und/oder C zu einem Präcompound umgesetzt. Gegenstand der Erfindung sind daher auch Zusammensetzungen, wobei mindestens ein Pfropfpolymer ausgewählt aus

der Gruppe aus B) und C) oder eine Teilmenge daraus sowie die Komponenten D oder eine Teilmenge der Komponente D in Form eines durch Compoundierung hergestellten Präcompounds eingesetzt wird. Besonders bevorzugt wird ein Präcompound aus einem Pfropfpolymerisat gemäß Komponente C hergestellt im Emulsionspolymerisationsverfahren und einem Copolymer gemäß Komponente D oder eine Teilmenge der Komponente D eingesetzt, wobei in einer bevorzugten Ausführungsform dieser Präcompound durch Abmischung der beiden Komponenten C und D in der Schmelze bei Temperaturen von 200 bis 260°C unter Anlegung eines Vakuums hergestellt wird.

In einer besonders bevorzugten Ausführungsform wird das Präcompound aus den entsprechenden Komponenten mittels Compoundierung unter Vakuumentgasung hergestellt, wobei ein emissionsarmen Präcompound resultiert. Besonders vorteilhaft ist es, bei dieser Entgasungscompoundierung die Komponente B bzw. C in feuchtem Zustand (d.h. in Anwesenheit von Wasser) gemäß dem Verfahren einzusetzen, welches in EP 0 768 157 A1 und EP 0 867 463 A1 beschrieben ist. Besonders geeignet sind Präcompounds, deren Gesamtgehalt flüchtiger organischer Verbindungen weniger als 400 mg/kg, bevorzugt weniger als 300 mg/kg, insbesondere weniger als 200 mg/kg ist. Im zweiten Verfahrensschritt werden die übrigen Bestandteile und das Präcompound in bekannter Weise vermischt und bei Temperaturen von 200°C bis 300°C in üblichen Aggregaten wie Innenknetem, Extrudern und Doppelwellenschnecken schmelzcompoundiert oder schmelzextrudiert. In einer bevorzugten Ausführungsform wird bei diesem zweiten Compoundierungsschritt zwecks weiterer Entgasung flüchtiger Bestandteile (wie z.B. Restmonomere und Restlösungsmittel) ein Unterdruck von <500 mbar, bevorzugt <150 mbar, insbesondere <100 mbar angelegt.

Gegenstand der Erfindung ist daher auch ein Verfahren zur Herstellung emissionsarmer erfindungsgemäßer Zusammensetzungen.

Die erfindungsgemäßen Formmassen können zur Herstellung von Formkörpern jeder Art verwendet werden. Diese können durch Spritzguss, Extrusion und Blasformverfahren hergestellt werden. Eine weitere Form der Verarbeitung ist die Herstellung von Formkörpern durch Tiefziehen aus zuvor hergestellten Platten oder Folien.

Beispiele für solche Formkörper sind Folien, Profile, Gehäuseteile jeder Art, z.B. für Haushaltsgeräte wie Saftpressen, Kaffeemaschinen, Mixer; für Büromaschinen wie Monitore, Flatscreens, Notebooks, Drucker, Kopierer; Platten, Rohre, Elektroinstallationskanäle, Fenster, Türen und weitere Profile für den Bausektor (Innenausbau und Außenanwendungen) sowie Elektro- und Elektronikteile wie Schalter, Stecker und Steckdosen sowie Karrosserie- bzw. Innenbauteile für Nutzfahrzeuge, insbesondere für den Automobilbereich.

Insbesondere können die erfindungsgemäßen Formmassen beispielsweise auch zur Herstellung von folgenden Formkörpern oder Formteilen verwendet werden: Innenausbauteile für Schienenfahrzeuge, Schiffe, Flugzeuge, Busse und andere Kraftfahrzeuge, Gehäuse von Kleintransformatoren enthaltenden Elektrogeräten, Gehäuse für Geräte zur Informationsverarbeitung und -Übermittlung, Gehäuse und Verkleidung von medizinischen Geräten, Massagegeräte und Gehäuse dafür. Spielfahrzeuge für Kinder, flächige Wandelemente, Gehäuse für Sicherheitseinrichtungen, wärmeisolierte Transportbehältnisse, Formteile für Sanitär- und Badausrüstungen, Abdeckgitter für Lüfter-öffnungen und Gehäuse für Gartengeräte.

## Beispiele

Komponente A

Lineares Polycarbonat auf Basis Bisphenol-A mit einem gewichtsgemittelten Molekulargewicht $M_w$ von 27500 g/mol (bestimmt durch GPC).

Komponente B-1

ABS-Polymerisat hergestellt durch Masse-Polymerisation von 82 Gew.-% bezogen auf das ABS-Polymerisat einer Mischung aus 24 Gew.-% Acrylnitril und 76 Gew.-% Styrol in Gegenwart von 18 Gew.-% bezogen auf das ABS-Polymerisat eines Polybutadien-Styrol-Blockcopolymerkautschuks mit einem Styrolgehalt von 26 Gew.-%. Das gewichtsgemittelte Molekulargewicht $\overline{M}_w$ des freien SAN-Copolymeranteils im ABS-Polymerisat beträgt 80000 g/mol (gemessen per GPC in THF). Der Gelgehalt des ABS-Polymerisats beträgt 24 Gew.-% (gemessen in Aceton).

Komponente C-1

ABS-Polymerisat hergestellt durch Masse-Polymerisation von 85 Gew.-% bezogen auf das ABS-Polymerisat einer Mischung aus 23 Gew.-% Acrylnitril und 77 Gew.-% Styrol in Gegenwart von 15 Gew.% bezogen auf das ABS-Polymerisat eines linearen Polybutadien-Kautschuks. Das gewichtsgemittelte Molekulargewicht $M_w$ des freien SAN-Copolymeranteils im ABS-Polymerisat beträgt 180000 g/mol (gemessen per GPC in THF). Der Gelgehalt des ABS-Polymerisats beträgt 25 Gew.-% (gemessen in Aceton).

Komponente C-2

Präcompound aus 50 Gew.-% eines ABS-Polymerisats hergestellt durch Emulsionsolymerisation und 50 Gew.-% eines SAN-Copolymerisats. Der Präcompound besitzt ein A:B:S-Gewichtsverhältnis von 17:26:57 und ist frei von Bestandteilen oder herstellungsbedingten Verunreinigungen, die den Abbau des Polycarbonats unter feucht-warmen Bedingungen katalysieren. Das gewichtsgemittelte Molekulargewicht des freien SAN-Copolymeranteils in diesem ABS-Präcompound beträgt 150000 g/mol. Der Gewichtsanteil des freien Copolymerisats der Komponente C-2 beträgt ca. 60 Gew.-%.

Komponente C-3

Präcompound aus 50 Gew.-% eines ABS-Polymerisats hergestellt durch Emulsionspolymerisation und 50 Gew.-% eines SAN-Copolymerisats. Der Präcompound besitzt ein A:B:S-Gewichtsverhältnis von 20:28:52. Die Pfropfpolymerisation erfolgte mit Dresinate® 731, einem Natriumsalz aus disproportioniertem Balsamharz (Abieta Chemie GmbH, Gersthofen, Deutschland), als Emulgator. Der Emulgator verbleibt herstellungsbedingt zum Teil im ABS. Das gewichtsgemittelte Molekulargewicht des freien SAN-Copolymeranteils in diesem ABS-Präcompound beträgt 100000 g/mol. Der Gewichtsanteil des freien Copolymerisats der Komponente C-3 beträgt ca. 60 Gew.-%.

Komponente D

SAN-Copolymerisat mit einem Acrylnitrilgehalt von 23 Gew.-% und einem gewichtsgemittelten Molekulargewicht von 130000 g/mol.

Komponente E

Bisphenol-A-basierendes Oligophosphat

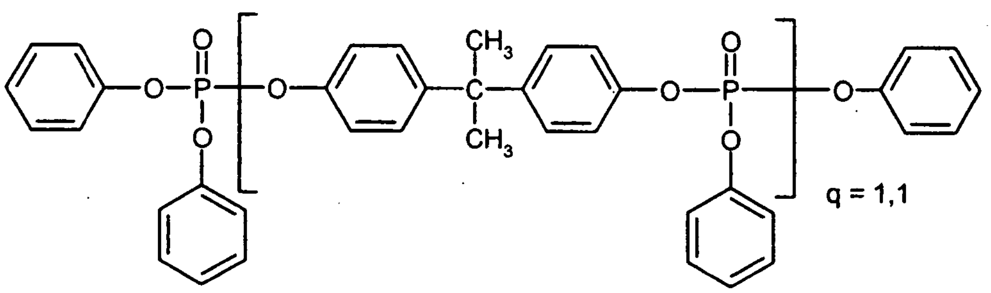

Komponente F

Komponente F-1 Pentaerythrittetrastearat

Komponente F-2 Irganox B900 (Hersteller: Ciba Specialty Chemicals Inc., Basel, Schweiz)

Herstellung und Prüfung der erfindungsgemäßen Formmassen

Das Mischen der Komponenten der Zusammensetzungen erfolgt auf einem 3-1-Innenkneter.

Die Formkörper werden auf einer Spritzgießmaschine Typ Arburg 270 E in der Regel bei 260°C hergestellt. Zwecks Beurteilung der Verarbeitungsstabilität werden zum Teil aber auch Prüfkörper bei der erhöhter Temperatur von 300°C oder bei 280°C mit dem dreifachen der normalen Verweilzeit (280°C/3x) hergestellt und getestet.

Die Schmelzeviskosität wird bei 260°C und einer Scherrate von 1000 $s^{-1}$ gemäß DIN 54811 bestimmt.

Die Bestimmung der Kerbschlagzähigkeit $a_k$ wird gemäß ISO 180/1 A bei Raumtemperatur oder bei tieferen Temperaturen durchgeführt. Die ak-Zäh-Sprödübergangstemperatur stellt die Temperatur dar, bei der in diesem Kerbschlagexperiment in etwa der Hälfte aller durchgeführten Experimente ein Zäh- bzw. Sprödbruch beobachtet wird.

Der Durchstoßversuch wird in Anlehnung an ISO 6603-2 bei Raumtemperatur bzw. niedrigeren Temperaturen durchgeführt. Ep ist die Gesamtenergieaufnahme in diesem Experiment, welche sich als Integral der Kraft-Dehnungs-Kurve berechnet. Es wird der Mittelwert aus 10 Einzelprüfungen angegeben. Desweiteren werden die Bruchbilder der einzelnen Prüfkörper dahingehend beurteilt, ob im überwiegenden Anteil (>80 %) der Experimente ein splitterfreies Versagen auftritt.

Das Spannungsrissverhalten unter Chemikalieneinwirkung (ESC-Verhalten) wird an Stäben der Abmessung 80 mm x 10 mm x 4 mm untersucht. Als Testmedium wird eine Handlotion (Sebamed Hand+Nagelbalsam, Sebapharma GmbH & Co. KG, Boppard, Deutschland) verwendet. Die Probekörper werden mittels einer Kreisbogenschablone vorgedehnt (Randfaserdehnung beträgt 2,4 %) und bei 23°C mit dem Testmedium beaufschlagt. Bestimmt wird die Zeit bis zum Bruch unter diesen Bedingungen.

Das Brandverhalten der Proben wird nach UL-Subj. 94 V an Stäben der Abmessung 127 x 12,7 x 1,6 mm gemessen, hergestellt auf einer Spritzgußmaschine bei 260°C.

Als Maß für den Polycarbonatabbau in den Zusammensetzungen bei Alterung im feucht-warmen Klima wird der MVR gemäß ISO 1133 bei 260°C mit 5kg Stempellast vor und nach einer 7-tägigen Lagerung bei 95°C und 100 % relativer Luftfeuchte bestimmt und der relative MVR-Anstieg gemäß folgender Formel berechnet:

$$MVR - \ddot{A}nderung = \frac{MVR(nach\ Alterung) - MVR(vor\ Alterung)}{MVR(vor\ Alterung)} * 100\%$$

Die Pfropfpolymere B und C gelten dann als frei von Bestandteilen oder herstellungsbedingten Verunreinigungen, die den Abbau des Polycarbonats unter feucht-warmen Bedingungen katalysieren, wenn die auf ihrer Basis hergestellten Polycarbonat-Zusammensetzungen in dem zuvor beschriebenen Lagerungstest unter feucht-warmen Bedingungen einen relativen MVR-Anstieg von nicht mehr als 100 % aufweisen.

In den Tabellen ist der Unterschied zwischen dem gewichtsgemittelten Molekulargewicht $\Delta M_w$ des freien (Co) Polymerisats im Pfropfpolymerisat B und dem gewichtsgemittelten Molekulargewicht der Mischung aus dem freien (Co) Polymerisat im Pfropfpolymerisat C bzw. des Präcompounds und des gegebenenfalls zugesetzten (Co)Polymerisats D angegeben, welcher sich im Sinne der vorliegenden Erfindung gemäß der nachfolgenden Formel berechnet:

$$\Delta \overline{M}_W = \frac{\left(x * \overline{M}_W(freies\ Copolymer\ aus\ C) + y * \overline{M}_W(Copolymer\ D)\right)}{x + y} - \overline{M}_W(freies\ Copolymerisat\ aus\ B)$$

wobei

x der Gewichtsanteil des freien Copolymerisats aus dem Pfropfpolymerisat C bzw. des Prä-compounds in der Gesamtzusammensetzung und

y der Gewichtsanteil des (Co)Polymerisats D in der Gesamtzusammensetzung

sind.

**Tabelle 1:** Formmassen und ihre Eigenschaften

| **Komponenten [Gew.-Teile]** | **1** Vergleich | **2** | **3** | **4** | **5** Vergleich |
|---|---|---|---|---|---|
| A | 60 | 60 | 60 | 60 | 60 |
| B-1 | - | 10 | 20 | 30 | 40 |
| C-1 | 40 | 30 | 20 | 10 | - |
| F-1 | 0,75 | 0,75 | 0,75 | 0,75 | 0,75 |
| F-2 | 0,1 | 0,1 | 0,1 | 0,1 | 0,1 |
| **Eigenschaften** | | | | | |
| Schmelzeviskosität (260°C/1000s$^{-1}$) [Pa.s] | 215 | 204 | 195 | 182 | 165 |

(fortgesetzt)

| Komponenten [Gew.-Teile] | **1** Vergleich | **2** | **3** | **4** | **5** Vergleich |
|---|---|---|---|---|---|
| $a_k$(-20°) [kJ/m$^2$] Bruchbild | 42 zäh | 50 zäh | 52 zäh | 44 zäh | 24 spröd |
| $a_k$-Zäh-Spröd-Übergangstemperatur [°C] | -55 | -45 | -40 | -35 | -15 |
| Durchstoßversuch (-30°C) Ep [J] Abspritztemperatur: 260°C | 46 | 48 | 54 | 51 | 45 |
| Durchstoßversuch (-30°C) - überwiegend splitterfreies Bruchversagen Abspritztemperatur: 260°C | ja | ja | ja | ja | Nein |
| Durchstoßversuch (-30°C) Ep [J] Abspritztemperatur: 300°C | 45 | 50 | 52 | 49 | 43 |
| Durchstoßversuch (-30°C)- überwiegend splitterfreies Bruchversagen Abpritztemperatur: 300°C | ja | ja | ja | ja | nein |
| ESC-Verhalten in Handlotion Zeit bis zum Bruch bei $\varepsilon_r$=2,4 % [d] | > 7 | >7 | > 7 | >7 | 2 |
| MVR-Anstieg (7d/95°C/100%Luftfeuchte) [%] | 14 | 13 | 15 | 7 | 9 |
| $\Delta M_w$ (berechnet) [g/mol] | - | 100000 | 100000 | 100000 | - |

**Tabelle 2:** Flammschutzmittel enthaltende Formmassen und ihre Eigenschaften

| Komponenten [Gew.-Teile] | **6** Vergleich | **7** | **8** | **9** | **10** Vergleich |
|---|---|---|---|---|---|
| A | 70 | 70 | 70 | 70 | 70 |
| B-1 | 16 | 12 | 8 | 4 | 0 |
| C-1 | 0 | 4 | 8 | 12 | 16 |
| E | 13 | 13 | 13 | 13 | 13 |
| F-1 | 0,4 | 0,4 | 0,4 | 0,4 | 0,4 |
| F-2 | 0,1 | 0,1 | 0,1 | 0,1 | 0,1 |
| **Eigenschaften** | | | | | |
| Schmelzeviskosität (260°C/1000s$^{-1}$) [Pa.s] | 150 | 153 | 155 | 161 | 189 |
| $a_k$(RT) [kJ/m$^2$] | 9 | 11 | 11 | 12 | 12 |
| Durchstoßversuch (RT) Ep [J] | 35 | 42 | 44 | 45 | 41 |
| Durchstoßversuch (RT) - überwiegend splitterfreies Bruchversagen | nein | ja | ja | ja | ja |
| UL 94V | V-1 | V-0 | V-0 | V-0 | V-0 |
| $\Delta$Mw (berechnet) [g/mol] | - | 100000 | 100000 | 100000 | - |

Alle Einstellungen in der Tabelle 2 enthalten zusätzlich 0,5% PTFE.

**Tabelle 3:** Formmassen und ihre Eigenschaften

| Komponenten [Gew.-Teile] | **11** Vergleich | **12** |
|---|---|---|
| A | 58 | 60 |
| B-1 | 12,6 | 12,0 |
| C-2 | - | 20,4 |
| C-3 | 21,4 | - |

(fortgesetzt)

| Komponenten [Gew.-Teile] | **11** Vergleich | **12** |
|---|---|---|
| D | 8,0 | 7,6 |
| F-1 | 0,75 | 0,75 |
| F-2 | 0,12 | 0,12 |
| **Eigenschaften** | | |
| Schmelzeviskosität (260°C/1000s$^{-1}$) [Pa.s] | 202 | 207 |
| $a_k$(-20°) [kJ/m$^2$]<br>Bruchbild | 39<br>zäh | 38<br>zäh |
| $a_k$-Zäh-Spröd-Übergangstemperatur [°C] | -25 | -25 |
| Durchstoßversuch (-20°C) Ep [J] Abspritztemperatur: 260°C | 48 | 51 |
| Durchstoßversuch (-20°C) - überwiegend splitterfreies Bruchversagen Abspritztemperatur: 260°C | ja | ja |
| Durchstoßversuch (-20°C) Ep [J] Abspritztemperatur: 280°C/3x | 8 | 22 |
| Durchstoßversuch (-20°C) - überwiegend splitterfreies Bruchversagen Abpritztemperatur: 280°C/3x | nein | ja |
| ESC-Verhalten in Handlotion Zeit bis zum Bruch bei $\varepsilon_r$=2,4 % [d] | 2 | 2 |
| MVR-Anstieg (7d/95°C/100% Luftfeuchte) [%] | 231 | 95 |
| $\Delta\underline{M}w$ (berechnet) [g/mol] | 31516 | 62339 |

Den in den Tabellen 1 und 2 dargestellten Ergebnissen ist zu entnehmen, dass die erfmdungsgemäßen Zusammensetzungen der Beispiele 2 bis 4 sowie 7 bis 9 eine den Vergleichsbeispielen 1 bzw. 10, welche ausschließlich die Komponente C enthalten, vergleichbare Duktilität bei zum Teil erheblich verbesserter Schmelzefließfähigkeit (reduzierter Schmelzeviskosität) besitzen. Die Vergleichsbeispiele 5 und 6, welche ausschließlich die Komponente B enthalten, besitzten zwar eine gute Schmelzefließfähigkeit, dagegen aber eine unzureichende Duktilität.

Weiterhin zeigen die in Tabelle 1 dargestellten Ergebnisse, dass sich die erfindungsgemäßen Zusammensetzungen durch eine exzellente Verarbeitungsstabilität (Konstanz der Duktilität über ein weites Verarbeitungsfenster) und Stabilität bei Lagerung in feucht-warmen Klima auszeichnen.

Die in Tabelle 3 dargestellten Ergebnisse zeigen, dass derartige Eigenschaften nicht nur erzielbar sind, sofern als Pfropfpolmyere B und C eine Kombination aus zwei im Masse-Polymerisationsverfahren hergestellten Pfropfpolymere zum Einsatz kommt, sondern auch mit einer Kombination aus einem Masse- und einem Emulsions-ABS als Komponente B bzw. C realisierbar sind, sofern das Emulsions-ABS frei ist von Bestandteilen, wie beispielsweise basisch wirkenden Verunreinigungen aus dem Emulsionspolymerisationsverfahren, die den Abbau des Polycarbonats unter feucht-warmen Bedingungen katalysieren.

## Patentansprüche

1. Zusammensetzung enthaltend

    A) aromatisches Polycarbonat und/oder aromatisches Polyestercarbonat,
    B) ein erstes Pfropfpolymerisat,
    C) ein zweites Pfropfpolymerisat,
    D) gegebenenfalls ein (Co)Polymerisat, und
    E) gegebenenfalls ein Flammschutzmittel,

    wobei das gewichtsgemittelte Molekulargewicht des freien (Co)Polymerisats im Pfropfpolymerisat B im Vergleich zum gewichtsgemittelten Molekulargewicht der Mischung aus dem freien (Co)Polymerisat im Pfropfpolymerisat C und des (Co)Polymerisats D um mindestens 32000 g/mol niedriger ist, und wobei das gewichtsgemittelte Molekulargewicht jeweils durch Gelpermeationschromatographie ermittelt wird.

**2.** Zusammensetzungen gemäß Anspruch 1, wobei der Anteil des Pfropfpolymerisats B an der Summe aus Pfropfpolymerisaten und (Co)Polymerisaten B + C + D 15 bis 85 Gew.-% beträgt.

**3.** Zusammensetzungen gemäß Anspruch 1 enthaltend

A) 25 bis 85 Gew.-Teile aromatisches Polycarbonat und/oder aromatisches Polyestercarbonat
B) 1 bis 60 Gew.-Teile eines ersten kautschulanodifizierten Pfropfpolymerisats,
C) 1 bis 60 Gew.-Teile eines zweiten kautschukmodifizierten Pfropfpolymerisats,
D) 0 bis 40 Gew.-Teile eines (Co)Polymerisats, und
E) 0 bis 30 Gew.-Teile eines Flammschutzmittels,

wobei das gewichtsgemittelte Molekulargewicht des freien (Co)Polymerisats im Pfropfpolymerisat B im Vergleich zum gewichtsgemittelten Molekulargewicht der Mischung aus dem freien (Co)Polymerisat im Pfropfpolymerisat C und des (Co)Polymerisats D um mindestens 32000 g/mol niedriger ist.

**4.** Zusammensetzung gemäß einem der Ansprüche 1 bis 3, wobei das gewichtsgemittelte Molekulargewicht des freien (Co)Polymerisats im Pfropfpolymerisat B im Vergleich zum gewichtsgemittelten Molekulargewicht der Mischung aus dem freien (Co)Polymerisat im Pfropfpolymerisat C und des (Co)Polymerisats D um mindestens 40000 g/mol niedriger ist.

**5.** Zusammensetzung gemäß Anspruch 3, wobei das kautschukmodifizierte Pfropfpolymerisat B freies, d.h. nicht chemisch an den Kautschuk gebundenes Copolymer mit einem gewichtsgemittelten Molekulargewicht von 60000 bis 99000 g/mol enthält.

**6.** Zusammensetzung gemäß Anspruch 3 enthaltend ein Pfropfpolymerisat B) aus

B.1) 5 bis 95 Gew.% bezogen auf die Komponente B einer Mischung aus

B.1.1) 65 bis 85 Gew.% bezogen auf B.1 mindestens eines Monomeren ausgewählt aus der Gruppe der Vinylaromaten, kemsubstituierten Vinylaromaten und Methacrylsäure-($C_1$-$C_8$)-Alkylester und
B.1.2) 15 bis 35 Gew.% bezogen auf B.1 mindestens eines Monomeren ausgewählt aus der Gruppe der Vinylcyanide, (Meth)Acrylsäure-($C_1$-$C_8$)-Alkylester und Derivate ungesättigter Carbonsäuren

auf
B.2) 95 bis 5 Gew.-% wenigstens einer Pfropfgrundlage mit einer Glasübergangstemperatur < 0°C, wobei die Pfropfgrundlage B.2) eine mittlere Teilchengröße ($d_{50}$-Wert) von 0,05 bis 10 $\mu$m aufweist.

**7.** Zusammensetzung gemäß Anspruch 6 enthaltend ein Pfropfpolymerisat C) aus

C.1) 5 bis 95 Gew.-% bezogen auf die Komponente C einer Mischung aus

C.1.1) 65 bis 85 Gew.-% bezogen auf C.1 mindestens eines Monomeren ausgewählt aus der Gruppe der Vinylaromaten, kemsubstituierten Vinylaromaten und Methacrylsäure-($C_1$-$C_8$)-Alkylester und
C.1.2) 15 bis 35 Gew.-% bezogen auf C.1 mindestens eines Monomeren ausgewählt aus der Gruppe der Vinylcyanide, (Meth)Acrylsäure-($C_1$-$C_8$)-Alkylester und Derivate ungesättigter Carbonsäuren

auf
C.2) 95 bis 5 Gew.-% wenigstens einer Pfropfgrundlage mit einer Glasübergangstemperatur < 0°C, wobei die Pfropfgrundlage C.2) eine mittlere Teilchengröße ($d_{50}$-Wert) von 0,05 bis 10 $\mu$m aufweist.

**8.** Zusammensetzungen gemäß Anspruch 1, wobei die Pfropfpolymerisate B) und C) frei sind von Bestandteilen bzw. verfahrensbedingten Verunreinigungen, die das Polycarbonat unter feucht-warmen Bedingungen katalytisch abbauen.

**9.** Zusammensetzung gemäß Anspruch 3 enthaltend Additive ausgewählt aus mindestens einem aus der Gruppe der Flammschutzmittel, Antidrippingmittel, Gleit- und Entformungsmittel, Nukleiermittel, Antistatika, Stabilisatoren, Füll- und Verstärkungsstoffe, Farbstoffe und Pigmente.

**10.** Zusammensetzung gemäß einem der Ansprüche 1 bis 9, wobei das (Co)Polymerisat D ein mittleres Molekulargewicht $M_w$ von 50000 bis 200 000 g/mol aufweist.

**11.** Zusammensetzung gemäß einem der Ansprüche 1 bis 10, wobei mindestens ein Pfropfpolymer ausgewählt aus der Gruppe aus B) und C) sowie die Komponente D oder eine Teilmenge der Komponente D in Form eines Präcompounds eingesetzt wird.

**12.** Zusammensetzung gemäß Anspruch 11, wobei ein Präcompound aus einem Pfropfpolymerisat gemäß Komponente C hergestellt im Emulsionspolymerisationsverfahren und einem Copolymer gemäß Komponente D eingesetzt wird.

**13.** Zusammensetzung gemäß Anspruch 12, wobei das Präcompound durch Abmischung der beiden Komponenten C und D in der Schmelze bei Temperaturen von 200 bis 260°C unter Anlegung eines Vakuums hergestellt wird.

**14.** Zusammensetzungen gemäß Anspruch 7, wobei die Komponente B ein Pfropfpolymerisat ist, welches im Masse-, Lösungs- oder Masse-Suspensions-Polymerisationsverfahren hergestellt ist.

**15.** Zusammensetzungen gemäß Anspruch 7, wobei das Pfropfpolymerisat B im Masse-, Lösungs- oder Masse-Suspensions-Polymerisationsverfahren hergestellt ist, und die Komponente C ein Pfropfpolymerisat ist, welches im Emulsionspolymerisationsverfahren hergestellt ist und bei dessen Herstellung im Pfropfungsschritt entweder kein Emulgator zugesetzt wurde oder als Emulgator eine solche Verbindung ausgewählt aus der Gruppe der Alkyl-, Aryl- bzw. Alkylarylsulfonsäuren bzw. Salzen dieser Verbindungen, Alkyl-, Aryl- bzw. Alkylarylsulfaten, Alkyl-, Aryl- bzw. Alkylarylphosphorsäuren bzw. Salzen dieser Verbindungen oder eine Mischung mehrerer der zuvorgenannten Verbindungen zum Einsatz kam.

**16.** Zusammensetzungen gemäß Anspruch 7, wobei die Komponenten B und C Pfropfpolymerisate sind, welche im Masse-, Lösungs- oder Masse-Suspensions-Polymerisationsverfahren hergestellt sind.

**17.** Verwendung der Zusammensetzungen gemäß Anspruch 1 bis 16 zur Herstellung von Formkörpern.

**18.** Formkörper, enthaltend eine Zusammensetzung nach einem der Ansprüche 1 bis 16.

**19.** Formkörper nach Anspruch 18 **dadurch gekennzeichnet, dass** der Formkörper ein Teil eines Kraftfahrzeugs, Schienenfahrzeugs, Luftfahrzeugs oder Wasserfahrzeugs ist.

**Claims**

**1.** Composition comprising

A) aromatic polycarbonate and/or aromatic polyester carbonate,
B) a first graft polymer,
C) a second graft polymer,
D) optionally a (co)polymer and
E) optionally flameproofing agents,

wherein the weight-average molecular weight of the free (co)polymer in graft polymer B is lower by at least 32,000 g/mol compared with the weight-average molecular weight of the mixture of the free (co)polymer in graft polymer C and of (co)polymer D, and wherein the weight-average molecular weight is in each case determined by gel permeation chromatography.

**2.** Compositions according to claim 1, wherein the content of graft polymer B in the sum of graft polymers and (co) polymers B + C + D is 15 to 85 wit.%.

**3.** Compositions according to claim 1, comprising

A) 25 to 35 parts by wt. of aromatic Polycarbonate and/or aromatic polyester carbonate and
B) 1 to 60 parts by wt. of a first rubber-modified graft polymer,
c) 1 to 60 parts by wt. of a second rubber-modified graft polymer,

D) 0 to 40 parts by wt, of a (co)polymer and
E) 0 to 30 parts by wt. of a flameproofing agent,

wherein the weight-average molecular weight of the free (co)polymer in graft polymer B is lower by at least 32,000 g/mol compared with the weight-average molecular weight of the mixture of the free (co)polymer in graft polymer C and of (co)polymer D.

**4.** Composition according to one of claims 1 to 3, wherein the weight-average molecular weight of the free (co)polymer in graft polymer B is lower by at least 40,000 g/mol compared with the weight-average molecular weight of the mixture of the free (co)polymer in graft polymer C and of (co)polymer D.

**5.** Composition according to claim 3, wherein the rubber-modiried graft polymer B comprises free, i.e. not bonded chemically to the rubber, copolymer having a weight-average molecular weight of from 60,000 to 99,000 g/mol.

**6.** Composition according to claim 3, comprising a graft polymer B) of

B.1) 5 to 95 wt.%, based on component B, of a mixture of

B.1.1) 65 to 85 wt.%, based on B.1, of at least one monomer chosen from the group consisting of vinylaromatics, nucleus-substituted vinylaromatics and methacrylic acid ($C_1$-$C_8$)-alkyl esters and
B.1.2) 15 to 35 wt.%, based on B.1, of at least one monomer chosen from the group consisting of vinyl cyanides, (meth)acrylic acid ($C_1$-$C_8$)-alkyl esters and derivatives of unsaturated carboxylic acids

on
B.2) 95 to 5 wt.% of at least one graft base having a glass transition temperature of < 0 °C, the graft base B.2) having an average particle size ($d_{50}$ value) of from 0.05 to 10 $\mu$m.

**7.** Composition according to claim 6, comprising a graft polymer C) of

C.1) 5 to 95 wt.%, based on component C, of a mixture of

C.1.1) 65 to 85 wt.%, based on C.1, of at least one monomer chosen from the group consisting of vinylaromatics, nucleus-substituted vinylaromatics and methacrylic acid ($C_1$-$C_8$)-alkyl esters and
C.1.2) 15 to 35 wt.%, based on C.1, of at least one monomer chosen from the group consisting of vinyl cyanides, (meth) acrylic acid ($C_1$-$C_8$)-alkyl esters and derivatives of unsaturated carboxylic acids

on
C.2) 95 to 5 wt.% of at least one graft base having a glass transition temperature of < 0 °C, the graft base C.2) having an average particle size ($d_{50}$ value) of from 0.05 to 10 $\mu$m.

**8.** Compositions according to claim 1, wherein graft polymers B) and C) are free from constituents or process-related impurities which catalytically degrade the polycarbonate under damp heat conditions,

**9.** composition according to claim 3, comprising additives chosen from at least one from the group consisting of flameproofing agents, anti tripping agents, lubricants and mould release agents, nucleating agents, antistatics, stabilizers, fillers and reinforcing substances, dyestuffs and pigments.

**10.** Composition according to one of claims 1 to 9,
wherein (co)polymer D has an average molecular weight $M_w$ of from 50,000 to 200,000 g/mol.

**11.** Composition according to one of claims 1 to 10, wherein at least one graft polymer chosen from the group consisting of B) and C) and component D or a part amount of component D is employed in the form of a precompound.

**12.** Composition according to claim 11, wherein a precompound of a graft polymer according to component C, prepared in the emulsion polymerization process, and a copolymer according to component D is employed.

**13.** Composition according to claim 12, wherein the precompound is prepared by mixing the two components C and D in the melt at temperatures of from 200 to 260 °C with application of a vacuum.

**14.** Compositions according to claim 7, wherein component B is a graft polymer which is prepared in the bulk, solution or bulk-suspension polymerization process.

**15.** Compositions according to claim 7, wherein graft polymer B is prepared in the bulk, solution or bulk-suspension polymerization process and component C is a graft polymer which is prepared in the emulsion polymerization process, and in the preparation of which either no emulsifier was added in the grafting step, or such a compound chosen from the group consisting of alkyl-, aryl- or alkylarylsulfonic acids and salts of these compounds, alkyl-, aryl- or alkylaryl sulfates, alkyl-, aryl- or alkylarylphosphoric acids and salts of these compounds or a mixture of several of the abovementioned compounds was employed as an emulsifier.

**16.** Compositions according to claim 7, wherein components B and C are graft polymers which are prepared in the bulk, solution or bulk-suspension polymerization process.

**17.** Use of the compositions according to clam 1 to 16 for the production of shaped articles.

**18.** Shaped articles comprising a composition according to one of claims 1 to 16.

**19.** Shaped, article according to claim 18, **characterized in that** the shaped article is a part of a motor vehicle, track vehicle, aircraft or water-craft.

**Revendications**

**1.** Composition contenant

A) un polycarbonate aromatique et/ou un polyestercarbonate aromatique,
B) un premier polymère greffé,
C) un second polymère greffé,
D) éventuellement un (co)polymère, et
E) éventuellement un agent ignifuge,

dans laquelle le poids moléculaire moyen en poids du (co)polymère libre dans le polymère greffé B est inférieur d'au moins 32 000 g/mol au poids moléculaire moyen en poids du mélange constitué du (co)polymère libre dans le polymère greffé C et du (co)polymère D, et dans laquelle le poids moléculaire moyen en poids est à chaque fois obtenu par chromatographie par perméation sur gel.

**2.** Compositions selon la revendication 1, dans lesquelles la part du polymère greffé B sur la somme des polymères greffés et des (co)polymères B+C+D est de 15 à 85 % en poids.

**3.** Compositions selon la revendication 1 contenant

A) de 25 à 85 parties en poids de polycarbonate aromatique et/ou de polyestercarbonate aromatique
B) de 1 à 60 parties en poids d'un premier polymère greffé caoutchouc-modifié,
C) de 1 à 60 parties en poids d'un second polymère greffé caoutchouc-modifié,
D) de 0 à 40 parties en poids d'un (co)polymère, et
E) de 0 à 30 parties en poids d'un agent ignifuge,

le poids moléculaire moyen en poids du (co)polymère libre dans le polymère greffé B est inférieur d'au moins 32 000 g/mol au poids moléculaire moyen en poids du mélange constitué du (co)polymère libre dans le polymère greffé C et du (co)polymère D.

**4.** Composition selon l'une quelconque des revendications 1 à 3, dans laquelle le poids moléculaire moyen en poids du (co)polymère libre dans le polymère greffé B est inférieur d'au moins 40 000 g/mol au poids moléculaire moyen en poids du mélange constitué du (co)polymère libre dans le polymère greffé C et du (co)polymère D.

**5.** Composition selon la revendication 3, dans laquelle le polymère greffé caoutchouc-modifié B contient un copolymère libre, c'est-à-dire non chimiquement lié au caoutchouc, avec un poids moléculaire moyen en poids de 60 000 à 99 000 g/mol.

**6.** Composition selon la revendication contenant un polymère greffé B) constitué de

B.1) 5 à 95 % en poids rapportés au constituant B d'un mélange constitué de

B.1.1) 65 à 85 % en poids rapportés à B.1 d'au moins un monomère choisi dans le groupe des composés aromatiques vinyliques, des composés aromatiques vinyliques substitués au noyau et des méthacrylates d'alkyle en $C_1$-$C_8$ et
B.1.2) de 15 à 35 % en poids rapportés à B.1 d'au moins un monomère choisi dans le groupe des cyanures de vinyle, des (méth)acrylates d'alkyle en $C_1$-$C_8$ et de dérivés d'acides carboxyliques insaturés

sur
B.2) de 95 à 5 % en poids d'au moins une base de greffage avec une température de transition vitreuse < 0°C, la base de greffage B.2) présentant une taille moyenne de particules (valeur $d_{50}$) de 0,05 à 10 $\mu$m.

**7.** Composition selon la revendication 6 contenant un polymère greffé C) constitué de

C.1.) 5 à 95 % en poids rapportés au constituant C d'un mélange constitué de

C.1.1) 65 à 85 % en poids rapportés à C.1 d'au moins un monomère choisi dans le groupe constitué des composés aromatiques vinyliques, des composés aromatiques vinyliques substitués au noyau et des méthacrylates d'alkyle en $C_1$-$C_8$ et
C.1.2) de 15 à 35 % en poids rapportés à C.1 d'au moins un monomère choisi dans le groupe constitué des cyanures de vinyle, des (méth)acrylates d'alkyle en $C_1$-$C_8$ et des dérivés d'acides carboxyliques insaturés
sur

C.2) de 95 à 5 % en poids d'au moins une base de greffage avec une température de transition vitreuse < 0°C, la base de greffage C.2) présentant une taille moyenne de particules (valeur $d_{50}$) de 0,05 à 10 $\mu$m.

**8.** Compositions selon la revendication 1, dans lesquelles les polymères greffés B) et C) sont exempts de constituants respectivement d'impuretés imposées par le procédé, lesquels décomposent catalytiquement le polycarbonate dans des conditions humides-chaudes.

**9.** Composition selon la revendication 3 contenant des additifs choisis parmi au moins un du groupe constitué d'agents ignifuges, d'agents anti-gouttes, de lubrifiants et d'agents de démoulage, d'agents de nucléation, d'antistatiques, de stabilisateurs, de charges et de matières de renforcement, de colorants et de pigments.

**10.** Composition selon l'une quelconque des revendications 1 à 9, dans laquelle le (co)polymère D présente un poids moléculaire moyen $M_W$ de 50 000 à 200 000 g/mol.

**11.** Composition selon l'une quelconque des revendications 1 à 10, dans laquelle au moins un polymère greffé choisi dans le groupe constitué de B) et de C) ainsi que le constituant D ou une quantité partielle du constituant D sont utilisés dans la forme d'un précomposé.

**12.** Composition selon la revendication 11, dans laquelle on utilise un précomposé constitué d'un polymère greffé selon le constituant C préparé dans un procédé de polymérisation en émulsion et d'un copolymère selon le constituant D.

**13.** Composition selon la revendication 12, dans laquelle le précomposé est préparé par mélange des deux constituants C et D dans la masse en fusion à des températures de 200 à 260°C sous application d'un vide.

**14.** Compositions selon la revendication 7, dans lesquelles le constituant D est un polymère greffé, lequel est préparé dans un procédé de polymérisation en masse, en solution ou en masse-suspension.

**15.** Compositions selon la revendication 7, dans lesquelles le polymère greffé B est préparé dans un procédé de polymérisation en masse, en solution ou en masse-suspension et le constituant C est un polymère greffé, lequel est préparé dans un procédé de polymérisation en émulsion et dans la préparation duquel dans l'étape de greffage, soit on n'a pas utilisé d'émulsionnant, soit on a utilisé comme émulsionnant un composé choisi dans le groupe constitué des acides alkyle-, aryle-, respectivement alkylaryle-sulfoniques respectivement des sels de ces composés,

des sulfates d'alkyle, d'aryle respectivement d'alkylaryle, des acides alkyle-, aryle- respectivement alkylaryle-phosphoriques respectivement des sels de ces composés ou d'un mélange de plusieurs des composés cités précédemment.

**16.** Compositions selon la revendication 7, dans lesquelles les constituants B et C sont des polymères greffés qui sont préparés dans un procédé de polymérisation en masse, en solution ou en masse-suspension.

**17.** Utilisation des compositions selon la revendication 1 à 16 pour la préparation de corps moulés.

**18.** Corps moulé contenant une composition selon l'une quelconque des revendications 1 à 16.

**19.** Corps moulé selon la revendication 18, **caractérisé en ce que** le corps moulé est une partie d'un véhicule automobile, d'un train, d'un avion ou d'un navire.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 0125334 A
- EP 0900827 A
- WO 9118052 A1
- WO 9911713 A1
- US 4624986 A
- US 4526926 A
- US 4677162 A
- EP 0312929 A
- WO 9424210 A
- EP 0456030 A
- EP 0372336 A2
- WO 9965991 A1
- DE 1495626 B
- DE 2232877 A
- DE 2703376 A
- DE 2714544 A
- DE 3000610 A
- DE 3832396 A
- DE 3077934 A
- DE 2842005 A
- US 3419634 A
- DE 3334782 A
- DE 2940024 A
- DE 3007934 A
- DE 2035390 A
- US PS3644574 A
- DE 2248242 A
- GB PS1409275 A
- GB 1409275 A
- EP 363608 A
- EP 640655 A
- US PS5844028 A
- EP 728811 A
- DE 1961668 A
- WO 9740092 A
- EP 0768157 A1
- EP 0867463 A1


### In der Beschreibung aufgeführte Nicht-Patentliteratur


- **Schnell.** Chemistry and Physics of Polycarbonates. Interscience Publishers, 1964
- **W. Scholtan ; H. Lange.** *Kolloid, Z. und Z. Polymere,* 1972, vol. 250, 782-1796
- **M. Hoffmann ; H. Krömer ; R. Kuhn.** Polymeranalytik I und II. Georg Thieme-Verlag, 1977
- **Ullmanns.** Enzyklopädie der Technischen Chemie. 1980, vol. 19, 280. ff
- **Ullmanns.** Enzyklopädie der Technischen Chemie. 1980, vol. 19, 280 ff
- Ullmanns Enzyklopädie der technischen Chemie. 1979, vol. 18, 301 ff
- **Houben-Weyl.** Methoden der organischen Chemie. vol. 12/1, 43
- *Beilstein,* vol. 6, 177